**Europäisches Patentamt**

**European Patent Office**

**Office européen des brevets**

(19)

(11) **EP 1 466 779 A2**

(12) **EUROPEAN PATENT APPLICATION**

(43) Date of publication:
**13.10.2004 Bulletin 2004/42**

(51) Int Cl.⁷: **B60L 11/12**, B60K 6/04,
H02P 6/08

(21) Application number: **04008603.5**

(22) Date of filing: **08.04.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **10.04.2003 JP 2003106907**
**26.01.2004 JP 2004017043**

(71) Applicant: **Hitachi, Ltd.**
**Chiyoda-ku, Tokyo 101-8010 (JP)**

(72) Inventors:
• **Goto, Kosei**
**Tokyo 100-8220 (JP)**
• **Innami, Toshiyuki**
**Tokyo 100-8220 (JP)**
• **Fujino, Shinichi**
**Tokyo 100-8220 (JP)**

• **Sakurai, Yoshimi**
**Tokyo 100-8220 (JP)**
• **Inaba, Masamitsu**
**Tokyo 100-8220 (JP)**
• **Iwamura, Masahiro**
**Tokyo 100-8220 (JP)**
• **Shirakawa, Shinji**
**Tokyo 100-8220 (JP)**
• **Sakano, Junichi**
**Tokyo 100-8220 (JP)**
• **Hashimoto, Keita**
**Tokyo 100-8220 (JP)**
• **Tsuchiya, Masanori**
**Tokyo 100-8220 (JP)**

(74) Representative: **Beetz & Partner Patentanwälte**
**Steinsdorfstrasse 10**
**80538 München (DE)**

(54) **Motor control device**

(57)     The invention relates to a control device (3) for a vehicular AC motor (9), which has higher efficiency of voltage utilization in a power running mode and has higher efficiency of electricity generation in an electricity generation mode. The motor control device (3) comprises rectifying devices and switching devices for three phases, which are connected between a DC power source (5) and armature coils (16) of an AC motor (9) operatively coupled to an internal combustion engine (1). The motor control device (3) has the inverter function of converting a DC power from the DC power source (5) into an AC power and supplying the AC power to the armature coils (16), and the converter function of converting an AC power generated by the AC motor (9) into a DC power and supplying the DC power to the DC power source (5). Rectangular-wave driving control of applying rectangular-wave voltages to the armature coils (16) of the AC motor (9) is performed when the AC motor (9) is operated for power running, and synchronous rectification control for making synchronous rectification of the AC power generated by the AC motor (9) is performed when the AC motor (9) is operated for electricity generation.

**FIG.2**

EP 1 466 779 A2

**Description**

BACKGROUND OF THE INVENTION

1. Field of the Invention

The present invention relates to a control device for a vehicular AC motor, and more particularly to a motor control device for controlling outputting of power (i.e., power running) and generation of electric power (i.e., electricity generation).

2. Description of the Related Art

As a control method for a vehicular AC motor, there is known PWM (Phase Width Modulation) control for switching a device with a high-frequency PWM signal and changing the phase of a current flowing through an armature coil of the AC motor relative to an induced voltage of the AC motor, thereby performing power running or electricity generation.

JP,A 2000-197204 discloses rectangular-wave driving control for applying, to an armature coil of an AC motor, a rectangular wave voltage each phase of which is changed over per half cycle (180°), and changing the phase of a current flowing through the armature coil relative to an induced voltage of the AC motor, thereby controlling torque of the AC motor. Further, in relation to electricity generation control, JP,A 2002-218797 discloses synchronous rectifying control for switching a device, which rectifies a current generated by an AC motor, in a region where an induced voltage of the AC motor is higher than a source voltage, thereby reducing a loss during the rectification.

In addition, as a known power running control method for an AC motor, JP,A 2001-45789, for example, discloses a method of changing over a rectangular-wave driving signal depending on a rotation speed. The turning-on width of the rectangular-wave driving signal is changed over in accordance with information, stored in advance, regarding the rotation speed and the motor efficiency.

SUMMARY OF THE INVENTION

In the case of driving an AC motor based on the PWM control, high switching frequency increases the number of times of switching to be made for a certain time and hence increases a switching loss as a whole. Also, because of a high switching speed, a ripple of DC voltage is increased and a smoothing capacitor having a large capacity is required to suppress the ripple, thus resulting in a larger size of a motor control device. Since an induced voltage of the AC motor must be held lower than the voltage capable of being controlled by the motor control device, the field intensity is weakened in the range of high rotation speeds. This requires an additional current and therefore reduces the efficiency. Further, noise caused with the switching operation may invite a problem in some cases.

In the case of driving an AC motor based on the rectangular-wave driving control, the switching frequency is lower than that in the PWM control and therefore a smoothing capacitor is not required. However, the current generated by the AC motor in the electricity generation mode flows only through a diode connected in anti-parallel relation to a switching device having a large loss. Accordingly, a loss during the electricity generation is increased as compared with the synchronous rectifying control in which a switching device and a diode are used in a combined manner for the rectification.

In order to obtain maximum torque in the power running mode, the phase of an applied voltage command for a switching device per phase must be controlled so as to lead relative to the phase of an induced voltage per phase of an armature coil. The angle of such a lead changes depending on the rotation speed and the interlinkage magnetic flux generated in an excitation coil. With the above in mind, in the power running control method disclosed in the above-cited JP,A 2001-45789, the turning-on width of the rectangular-wave driving signal is changed over depending on the rotation speed in accordance with the information, stored in advance, regarding the rotation speed and the motor efficiency. That changing-over control requires a microcomputer and therefore pushes up the cost.

Recently, it has been proposed to restart an engine without standing at idle after the engine operation is automatically stopped upon stop of a vehicle, by using alternator (generator) as a motor. In that case, because the engine is in the warmed-up state, it can be restarted with no need of more complicated control than that required in start from the cold state. Thus, complicated control using a microcomputer, for example, is not required. The use of a microcomputer also pushes up the cost.

Another problem experienced in the past is that a current generated by an alternator is rectified with diodes and hence efficiency is poor.

A first object of the present invention is to provide a control device for a vehicular AC motor, which has higher efficiency of voltage utilization in a power running mode and has higher efficiency of electricity generation in an electricity generation mode.

A second object of the present invention is to provide a motor control device, which can perform the power running control without using a microcomputer and has higher rectification efficiency.

To achieve the first object, according to the present invention, rectangular-wave driving control is performed when the AC motor is operated for power running, and synchronous rectifying control is performed when the AC motor is operated for electricity generation.

Since the rectangular-wave driving control is performed in the power running mode, the voltage applied to an armature coil of the AC motor is provided as a rectangular wave (1 pulse). In other words, a maximum voltage of the DC power source is applied to the armature coil of the AC motor and the utilization factor of voltage can be increased. It is therefore possible to increase the efficiency of control for weakening the field intensity, which is performed in the range of high rotation speeds. Further, since the switching frequency is low, a switching loss can be reduced. In addition, since the switching speed can be held slow, a smoothing capacitor having a large capacity is no longer required and the size of the motor control device can be reduced.

In the electricity generation mode, the synchronous rectification control is performed and the generated voltage may be rectified by combined use of a switching device and a diode connected to the switching device in anti-parallel connection. Accordingly, a loss during the rectification can be reduced and the efficiency of the electricity generation can be increased. Further, since the switching speed is relatively slow as in the rectangular-wave driving control, a smoothing capacitor is no longer required and the size of the motor control device can be reduced.

In any of the power running mode and the electricity generation mode, noises caused with the switching operation can be eliminated.

Also, to achieve the second object, a motor control device according to the present invention may comprise an upper arm driving unit for receiving a power-running or rectification mode command, selecting an upper-arm power running drive signal or an upper-arm rectification drive signal in response to the power-running or rectification mode command, and outputting the upper-arm power running drive signal or the upper-arm rectification drive signal to a control terminal of an upper-arm switching device; and a lower arm driving unit for receiving a power-running or rectification mode command, selecting a lower-arm power running drive signal or a lower-arm rectification drive signal in response to the power-running or rectification mode command, and outputting the lower-arm power running drive signal or the lower-arm rectification drive signal to a control terminal of a lower-arm switching device. A phase-correction drive signal distributing unit for receiving a magnetic pole position detected signal from an AC motor, advancing a phase of the magnetic pole position detected signal depending on a rotation speed of the AC motor, and distributing the magnetic pole position detected signal having the advanced phase as the upper-arm power running drive signal and the lower-arm power running drive signal, the upper-arm power running drive signal being outputted to the upper-arm driving means and the lower-arm power running drive signal being outputted to the lower-arm driving means, may be provided. The control device may further comprise an upper-arm rectification detecting unit for comparing the magnitude of a potential at a higher potential terminal for a main power source with the magnitude of a potential at an output terminal, and outputting the upper-arm rectification drive signal to the upper-arm driving unit when the magnitude of the potential at the output terminal is larger; and a lower-arm rectification detecting unit for comparing the magnitude of the potential at the output terminal with the magnitude of a potential at a lower potential terminal for the main power source, and outputting the lower-arm rectification drive signal to the lower-arm driving unit when the magnitude of the potential at the output terminal is smaller.

With the arrangement set forth above, the power running control can be performed without using a microcomputer, and the efficiency of rectification can be increased.

BRIEF DESCRIPTION OF THE DRAWINGS

Fig. 1 is a block diagram of a driving system of a vehicle mounted with a motor control device for a vehicle according to one embodiment of the present invention;

Fig. 2 is an electrical circuit diagram including the motor control device for the vehicle according to one embodiment of the present invention;

Fig. 3 is a chart showing a voltage vector, decomposed into d- and q-axis components, applied to an armature coil in rectangular-wave driving control in the power running mode according to one embodiment of the present invention;

Fig. 4 is a time chart showing an induced voltage per phase, an applied voltage command for an armature coil, a magnetic pole position signal, and a pulse applied to each switching device, which are used in the rectangular-wave driving control in the power running mode according to one embodiment of the present invention;

Fig. 5 is a block diagram of a power running control unit for executing the rectangular-wave driving control according to one embodiment of the present invention;

Fig. 6 is a flowchart of processing executed in the rectangular-wave driving control in the power running mode according to one embodiment of the present invention;

Fig. 7 is a time chart showing the induced voltage per phase, the applied voltage command for the armature coil, the magnetic pole position signal, and the pulse applied to each switching device, which are used in the rectangular-wave driving control in the power running mode according to one embodiment of the present invention when the pulse width of the applied voltage command for the armature coil is narrowed;

Fig. 8 is a graph showing the relationship between the rotation speed of an AC motor and the pulse width of the voltage applied to the armature coil resulting in the rectangular-wave driving control in the power running mode according to one embodiment of the present invention;

Fig. 9 is a graph showing the relationship between the battery voltage and the pulse width of the voltage applied to the armature coil resulting in the rectangular-wave driving control in the power running mode according to one embodiment of the present invention;

Fig. 10 is a graph showing the relationship between the temperature of the switching device and the pulse width of the applied voltage resulting in the rectangular-wave driving control in the power running mode according to one embodiment of the present invention;

Fig. 11 is a graph showing the relationship between the temperature of the armature coil and the pulse width of the applied voltage resulting in the rectangular-wave driving control in the power running mode according to one embodiment of the present invention;

Fig. 12 is a block diagram of an electricity generation control unit for executing synchronous rectification control according to one embodiment of the present invention;

Fig. 13 is a time chart showing the induced voltage per phase, the magnetic pole position signal, and the pulse applied to each switching device, which are used in the synchronous rectification control in the electricity generation mode according to one embodiment of the present invention when the battery voltage is lower than an induced voltage inter-line value Ve;

Fig. 14 is a time chart showing the induced voltage per phase, the magnetic pole position signal, and the pulse applied to each switching device, which are used in the synchronous rectification control in the electricity generation mode according to one embodiment of the present invention when the battery voltage is higher than the induced voltage inter-line value Ve;

Fig. 15 is a flowchart of processing executed in the synchronous rectification control in the electricity generation mode according to one embodiment of the present invention;

Fig. 16 is a graph showing one example of changeover timing between the power running control and the electricity generation control according to one embodiment of the present invention;

Fig. 17 is a graph showing another example of changeover timing between the power running control and the electricity generation control according to one embodiment of the present invention;

Fig. 18 is a block diagram of a motor control system using a motor control device according to another embodiment of the present invention;

Fig. 19 is a block diagram of a lead-angle drive signal distribution circuit used in the motor control device according to another embodiment of the present invention;

Fig. 20 is a graph for explaining the relationship between the rotation frequency and the lead angle, which is provided by the lead-angle drive signal distribution circuit used in the motor control device according to another embodiment of the present invention;

Fig. 21 is a graph for explaining the relationship between the rotation frequency and a current value of a constant current source, which is provided by the lead-angle drive signal distribution circuit used in the motor control device according to another embodiment of the present invention;

Fig. 22 is a circuit diagram of the constant current source used in the lead-angle drive signal distribution circuit of the motor control device according to another embodiment of the present invention;

Fig. 23 is a circuit diagram of a capacity charging switch and a capacity discharging switch both used in the lead-angle drive signal distribution circuit of the motor control device according to another embodiment of the present invention;

Fig. 24 is a waveform chart showing the operation of the lead-angle drive signal distribution circuit of the motor control device according to another embodiment of the present invention;

Fig. 25 is a waveform chart showing the operation of the lead-angle drive signal distribution circuit of the motor control device according to another embodiment of the present invention;

Fig. 26 is a waveform chart of MOSFET gate drive signals of the U, V and W phases in the power running control when the motor control device according to another embodiment of the present invention is employed;

Fig. 27 is a block diagram of a rectification detecting/driving circuit used in the motor control device according to another embodiment of the present invention;

Fig. 28 is a waveform chart of the rectification detecting/driving circuit used in the motor control device according to another embodiment of the present invention; and

Fig. 29 is a waveform chart of MOSFET gate drive signals of the U, V and W phases in the synchronous rectification control executed by the motor control device according to another embodiment of the present invention.

DESCRIPTION OF THE PREFERRED EMBODIMENTS

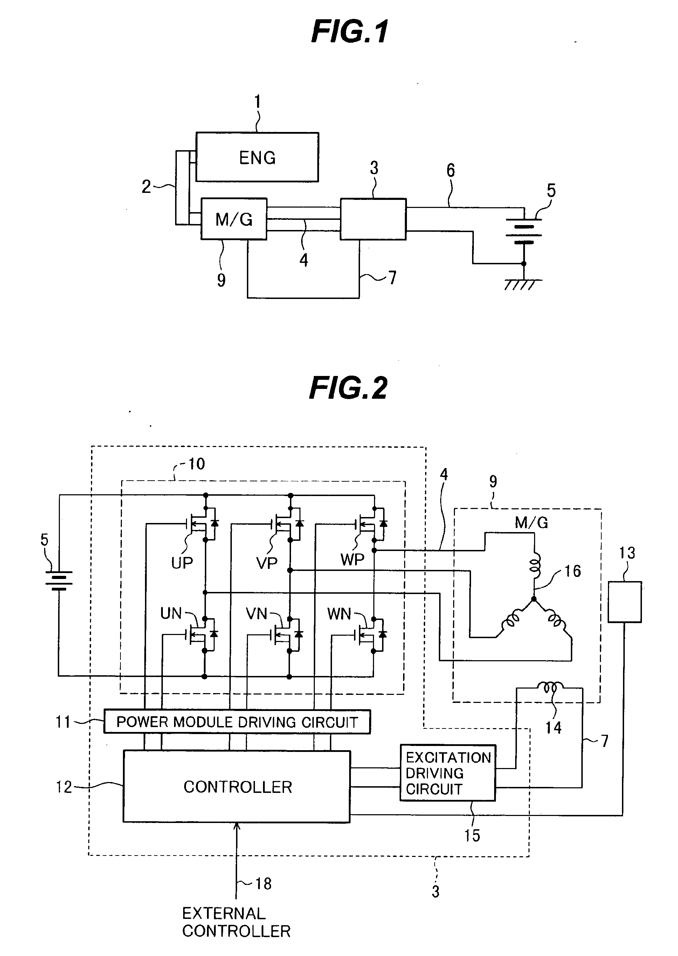

Embodiments of the present invention will be described below with reference to the accompanying drawings. Fig. 1 shows the construction of a driving system of a vehicle mounted with a motor control device for a vehicle according to one embodiment of the present invention. As shown in Fig. 1, the driving system of the vehicle comprises an internal combustion engine 1, an AC motor (motor/generator) 9, a motor control device 3, and a DC power source (battery) 5. A crankshaft of the internal combustion engine 1 and an output shaft of the AC motor 9 are coupled to each other through a power transmitting means 2 such as a belt. Also, the AC motor 9 and the motor control device 3 are connected to each other by 3-phase power cables (output lines) 4 and an excitation cable 7. The motor control device 3 is connected to the DC power source (battery) 5 via DC power cables (power source lines) 6.

The motor control device 3 operates as an inverter circuit for converting a DC power from the DC power source 5 into an AC power when it performs power running control while employing the AC motor 9 as a motor. The motor control device 3 also operates as a converter (rectifier) circuit for converting an AC power from the AC motor 9 into a DC power when it performs electricity generation control while employing the AC motor 9 as a generator.

When the internal combustion engine 1 is started up, the motor control device 3 performs the power running control for the AC motor 9. In other words, the AC power is supplied to the AC motor 9 from the DC power source 5 through the motor control device 3. The output shaft of the AC motor 9 produces a powering torque for rotating the crankshaft of the internal combustion engine 1 through the power transmitting means 2. When the internal combustion engine 1 reaches a predetermined revolution speed, firing is started. In this case, the AC motor 9 serves as a starter motor.

When the internal combustion engine 1 is in a stable self-sustained operating state, the motor control device 3 stops the power running control for the AC motor 9 and starts the electricity generation control. In other words, the AC motor 9 is driven by the power of the internal combustion engine 1 to generate electricity. An AC power obtained with the electricity generation is converted into a DC power by the motor control device 3 and then charged in the DC power source 5.

Thus, the AC motor 9 functions not only as a motor supplied with electricity from the DC power source 5 and generating power, but also as a generator supplied with power from the internal combustion engine 1 and generating electricity.

The electrical configuration of the driving system shown in Fig. 1 will be described below with reference to Fig. 2. The motor control device 3 of this embodiment comprises a power module 10, a power module driving circuit 11, a controller 12, and an excitation driving circuit 15.

The power module 10 is constituted as a 3-phase bridge circuit including switching devices (UP to WN) and rectifying devices connected respectively to the switching devices in anti-parallel relation. In this embodiment, a field effect transistor (FET) is used as the switching device, and a diode is used as the rectifying device.

The AC motor 9 comprises a stator and a rotor, and it is constituted as a 3-phase AC motor of winding field type. An excitation coil 14 is wound over the rotor coupled to the power transmitting means 2 for driving, and armature coils 16 for the U, V and W phases are wound over the stator.

The AC motor 9 is provided with a magnetic pole position detecting means 13 for detecting the rotational position of the rotor. The rotor's excitation coil 14 of the AC motor 9 is supplied with electricity from the excitation driving circuit 15. Also, the voltage applied to the excitation coil 14 is adjusted by the excitation driving circuit 15. The output lines 4 for the respective phases extended from the stator's armature coils 16 of the AC motor 9 are connected to the power source lines 6, which are connected to a high-potential side terminal and a low-potential side terminal of the DC power source 5, through the 3-phase switching devices (UP to WN) and associated rectification devices of the power module 10.

When the power running control is performed while employing the AC motor 9 as a motor, the power module 10 operates as an inverter circuit for converting a DC power accumulated in the DC power source 5 into an AC power and supplying the AC power to the armature coils 16. Also, when the electricity generation control is performed while employing the AC motor 9 as a generator, the power module 10 operates as a converter (rectifier) circuit for converting an AC power outputted from the armature coils 16 with the electricity generation into a DC power and supplying the DC power to the power source lines 6. Turning-on/off of the switching devices (UP to WN) to realize the above-described operation of the power module 10 is controlled by the power module driving circuit 11.

On the other hand, the controller 12 includes, as described later, a changeover means for changing over the power running mode and the electricity generation mode so that one of the power running control and the electricity generation control is selectively performed.

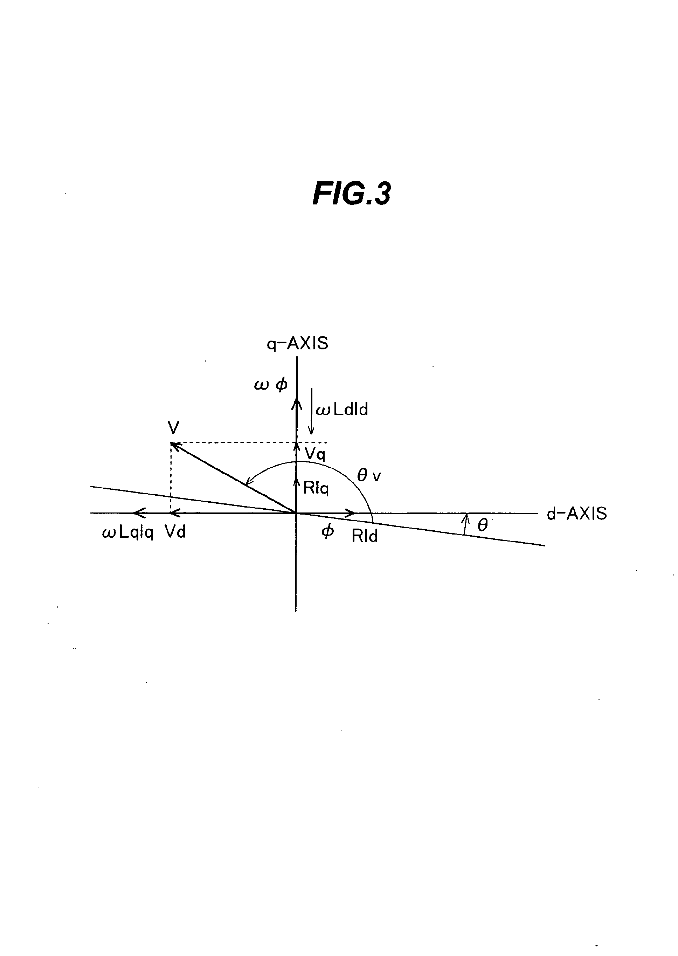

Rectangular-wave driving control executed as the power running control will be described below with reference to Fig. 3. Fig. 3 shows the relationship, represented in the form converted into two axes (d- and q-axis), between a current and a voltage supplied in the power running control to the stator's armature coil 16 of the AC motor 9. Upon supply of electricity from the excitation driving circuit 15, interlinkage magnetic flux $\phi$ is generated in the rotor's excitation coil 14 in the positive direction of the d-axis. The power running operation is performed by causing a current to flow in the positive direction of the q-axis that is perpendicular to the vector of the interlinkage magnetic flux $\phi$.

More specifically, assuming that Iq is a q-axis component of the current flowing through the armature coil 16 and Id is a d-axis component of the current flowing through the armature coil 16, a phase $\theta v$ of a voltage vector V applied to the armature coil 16 is controlled so that the relationship expressed by the following formula (1) is satisfied:

$$Iq > 0, Id = 0 \tag{1}$$

The phase $\theta v$ of the voltage vector V applied to the armature coil 16 is derived from the following formula (2):

$$\theta v = \theta + \tan^{-1}(Vq/Vd) \tag{2}$$

where $\theta$ is the magnetic pole position or the electrical angle detected by the magnetic pole position detecting means 13, Vq is a q-axis component of the voltage vector V applied to the armature coil 16, and Vd is a d-axis component of the applied voltage vector V. Further, the following formulae are held for the voltage vector V applied to the armature coil 16:

$$V = Vq + Vd \tag{3}$$

$$Vq = Iq \cdot R + \omega \cdot \phi - \omega \cdot Ld \cdot Id \tag{4}$$

$$Vd = Id \cdot R - \omega \cdot Lq \cdot Iq \tag{5}$$

where R is the resistance of the armature coil 16, $\omega$ is the rotation speed of the AC motor 9, Lq is a q-axis inductance component of the armature coil 16, and Ld is a d-axis inductance component of the armature coil 16.

As will be seen from the above relationship, the phase $\theta v$ of the voltage vector V applied to the armature coil 16 changes successively depending on changes of both the rotation speed $\omega$ and the interlinkage magnetic flux $\phi$. In this embodiment of the present invention, therefore, respective values of the d-axis component Vd of the voltage vector V and the q-axis component Vq of the applied voltage vector V applied to the armature coil 16 are computed from a map prepared with the rotation speed $\omega$ and the interlinkage magnetic flux $\phi$ being parameters.

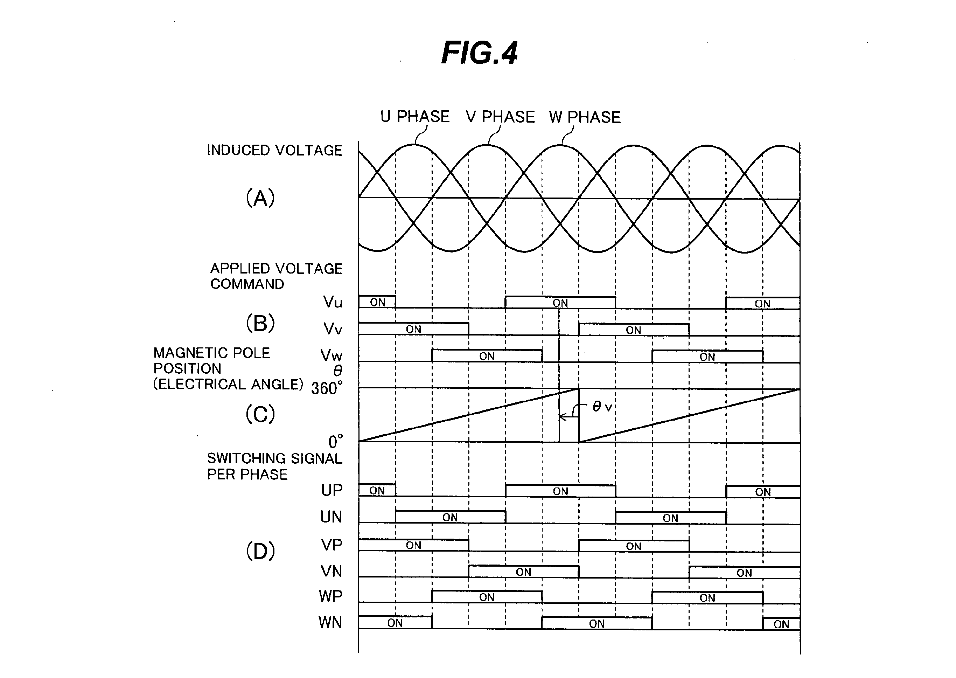

A further description is made with reference to Fig. 4. (A) in Fig. 4 represents voltages induced in the armature coils 16 per phase, and (B) represents voltage commands Vu, Vv and Vw applied to the armature coils 16 per phase. Also, (C) represents the magnetic pole position, i.e., the electrical angle $\theta$, and (D) represents switching command signals applied to the switching devices (UP to WN). In this embodiment, the electrical angle $\theta$ shown in Fig. 4(C) represents the angle of the induced voltage of the U phase.

In this embodiment, as shown in Fig. 4(B), the applied voltage commands Vu, Vv and Vw are each supplied at the electrical angle covering the range of 180°.

As will be seen from comparison between the U-phase applied voltage command Vu shown in Fig. 4(B) and the magnetic pole position $\theta$ shown in Fig. 4(C), the phase of the U-phase applied voltage command Vu is advanced relative to the magnetic pole position $\theta$ by the phase $\theta v$ of the applied voltage vector. In other words, there holds the relationship expressed by the above formula (2). Assuming the present magnetic pole position to be 0°, for example, the phase of the U-phase applied voltage command Vu is equal to the phase 6v of the applied voltage vector.

Further, as will be seen from comparison between Fig. 4(B) and Fig. 4(D), once the voltage commands Vu, Vv and Vw to be applied to the armature coils 16 per phase are determined, switching command signals having the same phases as the applied voltage command phases are produced.

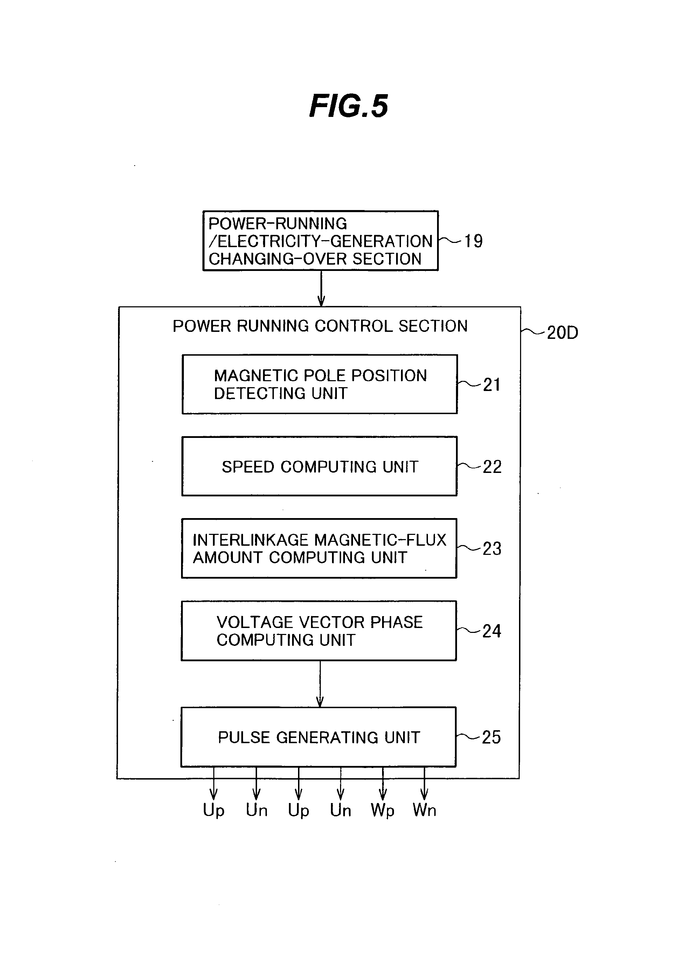

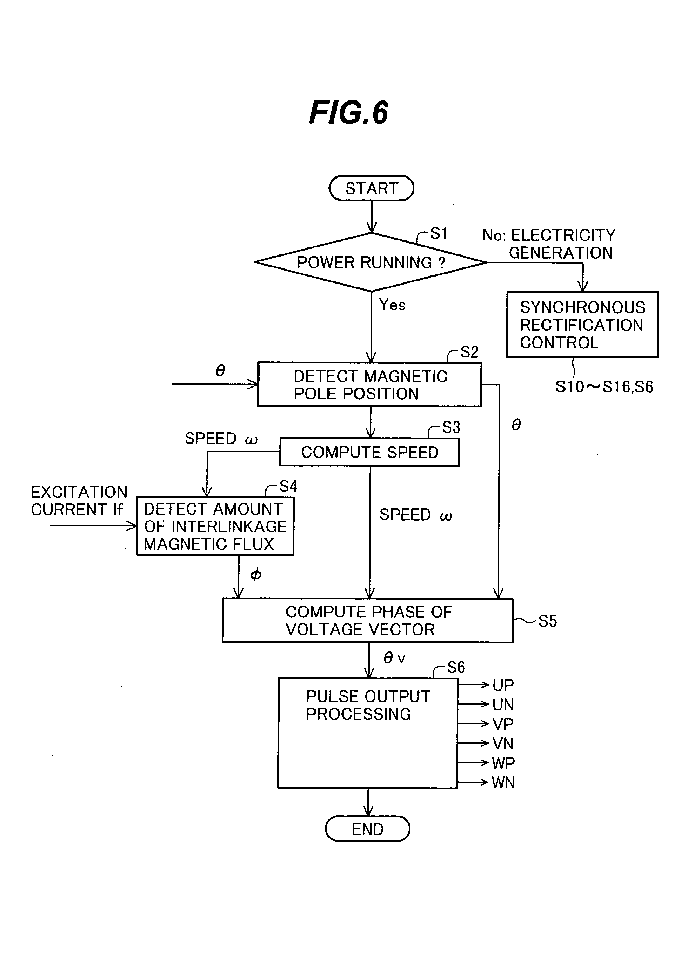

With reference to Fig. 5, a description is now made of a portion of the construction of the controller 12 which is related to the power running control. The controller 12 comprises a power-running/electricity-generation changing-over section 19 for determining which one of the power running control and the electricity generation control is to be performed, and changing over the power running control and the electricity generation control from one to the other, and a power running control section 20D for executing the rectangular-wave driving control. The power running control section 20D comprises a magnetic pole position detecting unit 21 for detecting the magnetic pole position or the electrical angle of the AC motor 9, a speed computing unit 22 for computing the rotation speed ω of the AC motor 9, an interlinkage magnetic-flux amount computing unit 23 for computing the amount (number) of magnetic flux φ interlinking with the armature coils 16 of the stator, a voltage vector phase computing unit 24 for computing the phase θv of the voltage vector V applied to the armature coil 16, and a pulse generating unit 25 for producing the switching signals applied to the switching devices (UP to WN) of the power module 10. The operations of those components will be described below with reference to Fig. 6.

The operation of the rectangular-wave driving control in the power running control according to this embodiment of the present invention will be described with reference to Fig. 6. First, in step S1 it is determined, in accordance with a changeover command signal 18 from an external controller, which one of the power running control and the electricity generation control is to be performed. If the power running control is to be performed, the control flow proceeds to step S2. Then, in step S2, the magnetic pole position θ is computed based on a pulse signal outputted from the magnetic pole position detecting means 13. In step S3, the actual rotation speed ω of the AC motor 9 is computed based on a time-dependent change of the pulse signal outputted from the magnetic pole position detecting means 13. In step S4, the amount of magnetic flux φ interlinking with the armature coils 16 of the stator is computed from both the rotation speed ω computed in step S3 and the excitation current If in the excitation coil 14 of the rotor detected by the excitation driving circuit 15. In this embodiment, a map for the amount of interlinkage magnetic flux φ is prepared in advance from calculations based on experimental results, for example, with the excitation current If and the rotation speed ω being parameters, and the corresponding amount of interlinkage magnetic flux φ is determined from the map.

In step S5, the d-axis component Vd of the voltage vector V applied to the armature coil 16 and the q-axis component Vq of the applied voltage vector V are computed from the amount of interlinkage magnetic flux φ, the rotation speed ω and the magnetic pole position θ, which were computed respectively in steps 4, 3 and 2, by using the above formulae (4) and (5). Then, the phase θv of the voltage vector V is computed from Vd, Vq and θ by using the above formula (2).

In step S6, phases or timings of the applied voltages Vu, Vv and Vw are obtained based on the voltage vector phase θv that was computed in step S5. Switching command signals are then produced based on the phases or timings of the applied voltages Vu, Vv and Vw.

In this embodiment, since the rectangular-wave driving control is performed in the power running mode, the voltage applied to the armature coil of the AC motor is provided as a rectangular wave (1 pulse), whereby a maximum voltage of the DC circuit is given and the utilization factor of voltage can be increased. It is therefore possible to increase the efficiency of control for weakening the field intensity, which is performed in the range of high rotation speeds. Further, since the switching frequency is low, a switching loss can be reduced. In addition, since the switching speed can be held slow, a smoothing capacitor having a large capacity is no longer required and the size of the motor control device can be reduced.

In the rectangular-wave driving control according to this embodiment of the present invention, unlike the PWM control in which the current flowing through the armature coil 16 is subjected to feedback control, the voltage of the DC power source 5 is directly applied to the armature coil 16 at the duty of a half cycle (180°) of the electrical angle θ as shown at (B) and (D) in Fig. 4. Accordingly, when the vehicle is running at low speeds or is stopped and the impedance of the armature coil 16 is reduced, there is a risk that a large current flows through the power module 10 and the AC motor 9 to such an extent that the switching devices (UP to WN) in the power module 10 may break or the AC motor 9 may come into an overheating state. For that reason, the impedance of the armature coil 16 must be set so as to prevent a current from flowing through the power module 10 and the AC motor 9 at a value beyond the allowable current value when the voltage of the DC power source 5 is applied. In this embodiment, the value of resistance R of the armature coil 16, shown in the above formulae (4) and (5), is set so that a current beyond the allowable current value will now flow through the power module 10 and the AC motor 9.

In order to prevent an overcurrent state, i.e., a state of a current flowing beyond the allowable current value, when the vehicle is running at low speeds or is stopped and the impedance of the armature coil 16 is reduced, the pulse width of the applied voltage may be narrowed from the original setting, i.e., 180°, to a value smaller than 180° to reduce the current flowing through the armature coil 16. In other words, the voltage may be applied to the armature coil 16 at the duty smaller than the half cycle (180°) of the electrical angle θ.

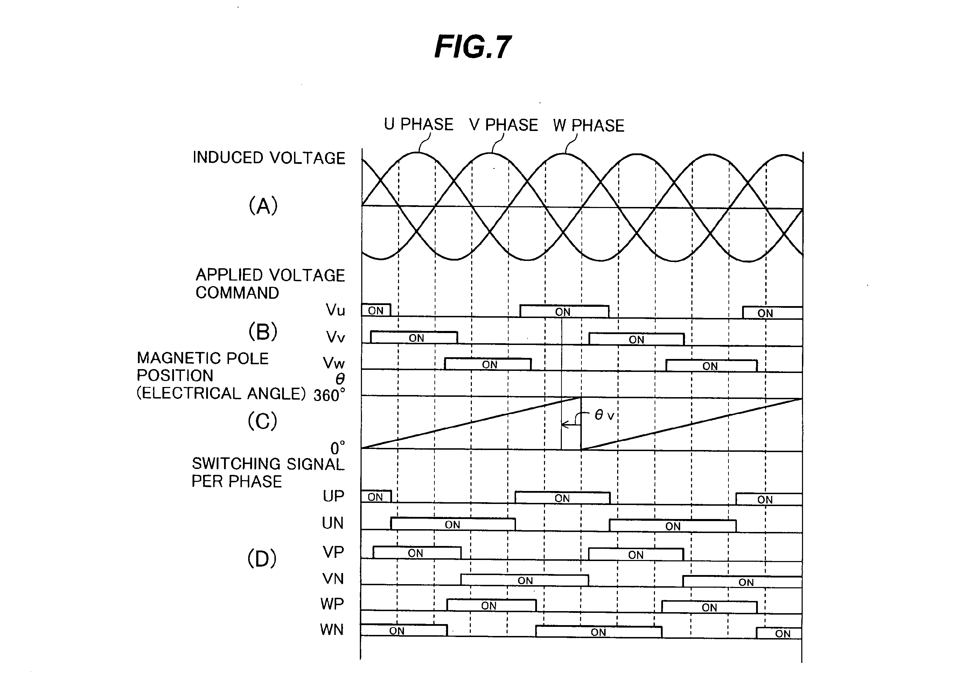

Such a case will be described below with reference to Fig. 7. (A) in Fig. 7 represents voltages induced in the armature coils 16 per phase, and (B) represents voltage commands Vu, Vv and Vw applied to the armature coils 16 per phase. Also, (C) represents the magnetic pole position, i.e., the electrical angle θ, and (D) represents switching command signals applied to the switching devices (UP to WN).

In this embodiment, as shown in Fig. 7(B), the applied voltage commands Vu, Vv and Vw are each supplied at the electrical angle covering the range of 180°.

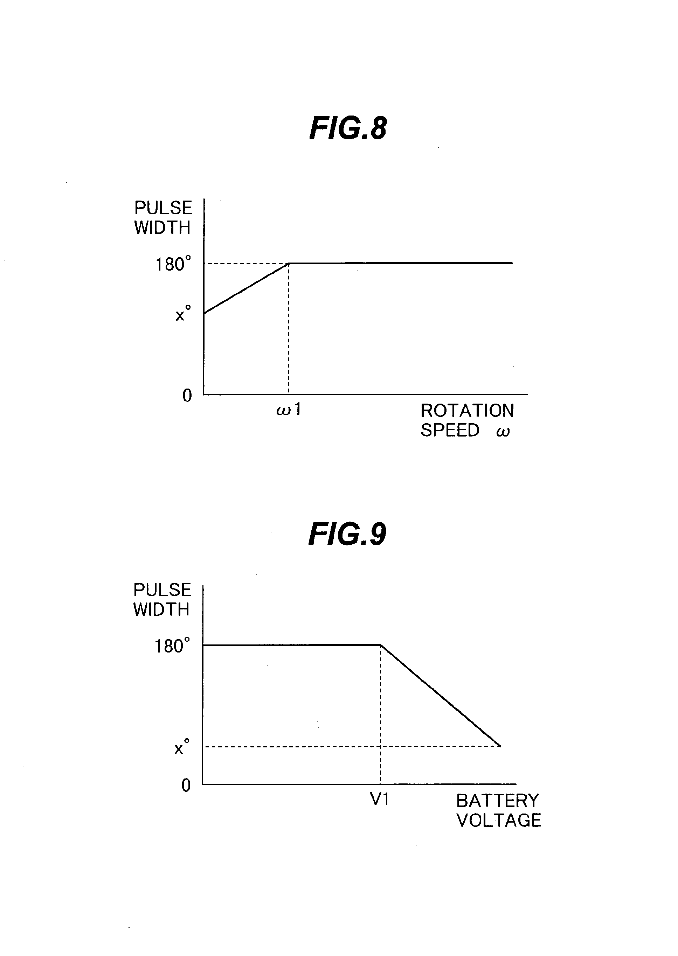

Fig. 8 shows the relationship between the pulse width (duty) of the voltage applied to the armature coil 16 per phase and the rotation speed $\omega$ of the AC motor 9. In the region where the rotation speed $\omega$ of the AC motor 9 is high, the pulse width of the applied voltage is set to 180°. In the region where the rotation speed $\omega$ of the AC motor 9 is lower than a predetermined speed $\omega1$, the pulse width of the applied voltage is gradually narrowed toward a lower limit value x° as the rotation speed reduces. As a result, the overcurrent state can be prevented from occurring when the vehicle is running at low speeds or is stopped.

When the voltage of the DC power source 5 increases, there is also a risk that an overcurrent may flow in the armature coils 16. Accordingly, when the voltage of the DC power source 5 increases in excess of a predetermined value, it is also possible to narrow the pulse width of the applied voltage as shown in Fig. 7.

Fig. 9 shows the relationship between the pulse width of the voltage applied to the armature coil 16 per phase and the voltage of the DC power source (battery) 5. In the region where the voltage of the DC power source 5 is not higher than a predetermined voltage V1, the pulse width of the applied voltage is set to 180°. When the voltage of the DC power source 5 becomes higher than the predetermined voltage V1, the pulse width of the applied voltage is gradually narrowed toward a lower limit value x°. As a result, the overcurrent state can be prevented from occurring when the voltage of the DC power source 5 increases excessively.

Further, when the temperature of the switching devices (UP to WN) or the temperature of the AC motor 9 rises, the pulse width of the applied voltage may be narrowed to reduce the currents flowing through the armature coils 16 and the switching devices (UP to WN) so that those temperatures will not exceed respective allowable values.

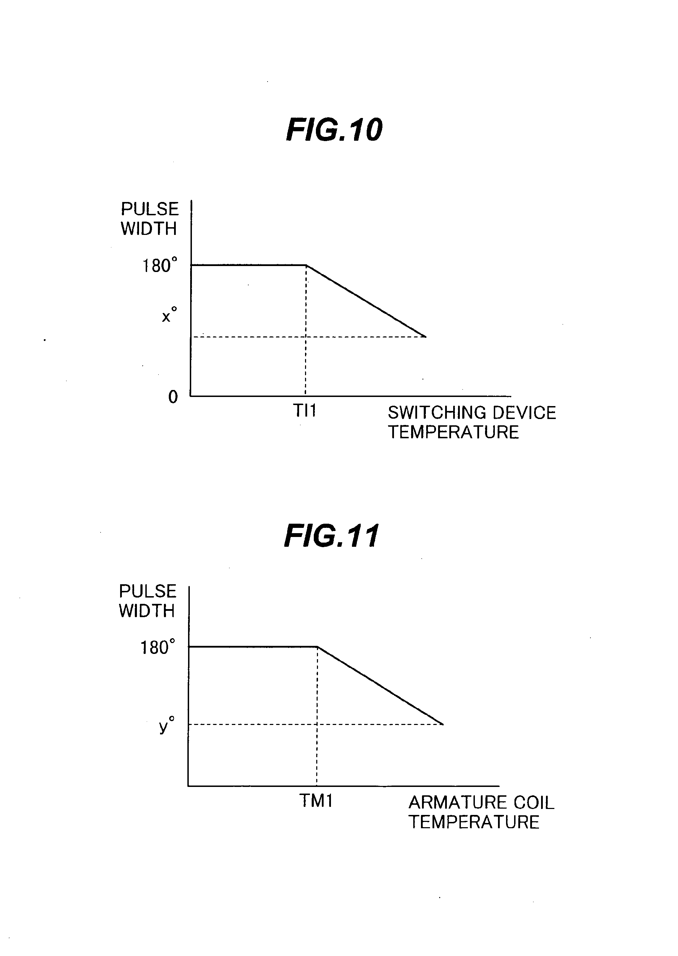

Fig. 10 shows the relationship between the pulse width of the voltage applied to the armature coil 16 per phase and the temperature of the switching devices (UP to WN). In the region where the temperature of the switching devices (UP to WN) is not higher than a predetermined temperature TI1, the pulse width of the applied voltage is set to 180°. When the temperature of the switching devices (UP to WN) becomes higher than the predetermined temperature TI1, the pulse width of the applied voltage is gradually narrowed toward a lower limit value x°.

Fig. 11 shows the relationship between the pulse width of the voltage applied to the armature coil 16 per phase and the temperature of the armature coil 16. In the region where the temperature of the armature coil 16 is not higher than a predetermined temperature TM1, the pulse width of the applied voltage is set to 180°. When the temperature of the armature coil 16 becomes higher than the predetermined temperature TM1, the pulse width of the applied voltage is gradually narrowed toward a lower limit value y°.

Thus, in this embodiment, the armature coils 16 and the switching devices (UP to WN) are prevented from coming into the excessively high temperature state (overheated state) by narrowing the pulse width of the voltage applied to the armature coil 16 per phase. In this respect, the pulse width used in practice is determined by comparing the narrowed pulse width of the applied voltage necessary to prevent an excessive temperature rise of the switching devices (UP to WN) with the narrowed pulse width of the applied voltage necessary to prevent an excessive temperature rise of the armature coil 16, and then selecting a smaller one.

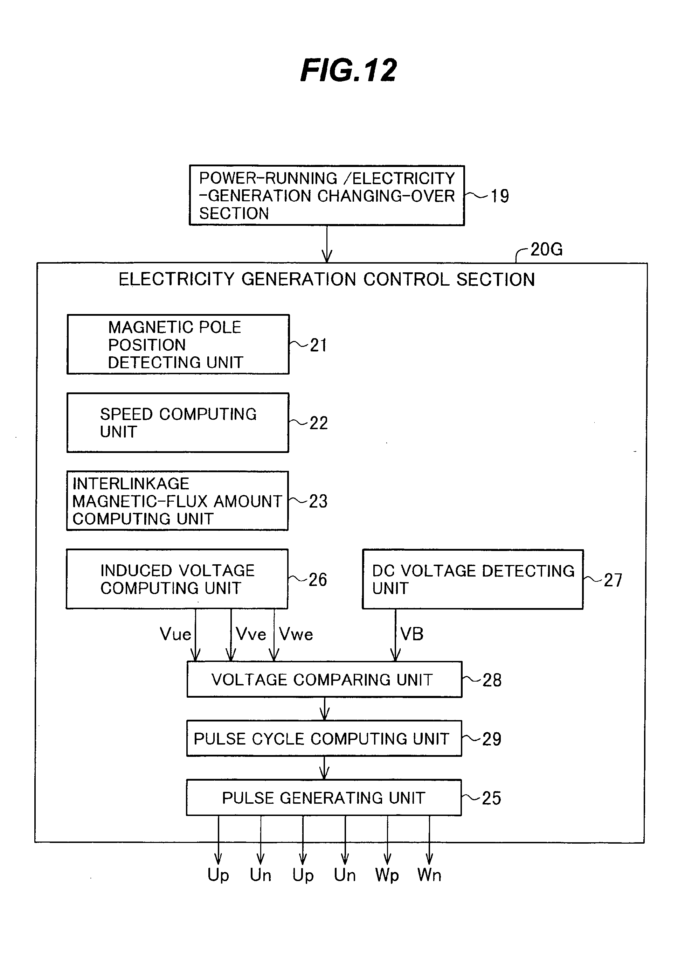

Of the construction of the controller 12, a portion regarding the electricity generation control will be described below with reference to Fig. 12. The controller 12 comprises the power-running/electricity-generation changing-over section 19 for determining which one the power running control and the electricity generation control is to be performed, and changing over the power running control and the electricity generation control, and an electricity generation control section 20G for executing the synchronous rectification control. The electricity generation control section 20G comprises a magnetic pole position detecting unit 21 for detecting the magnetic pole position or the electrical angle of the AC motor 9, a speed computing unit 22 for computing the rotation speed $\omega$ of the AC motor 9, an interlinkage magnetic-flux amount computing unit 23 for computing the amount (number) of magnetic flux $\phi$ interlinking with the armature coils 16 of the stator, an induced voltage computing unit 26 for computing the voltages Vue, Vve and Vwe of the respective phases induced in the armature coils 16 of the AC motor 9, a DC voltage detecting unit 27 for detecting a voltage VB of the DC power source 5, a voltage comparing unit 28 for comparing inter-line values of the induced voltages Vue, Vve and Vwe with the voltage VB of the DC power source 5, a pulse cycle computing unit 29 for computing, based on the comparison results of the voltage comparing unit 28, pulse cycles of the switching signals applied to the switching devices (UP to WN) of the power module 10, and a pulse generating unit 25 for producing the switching signals.

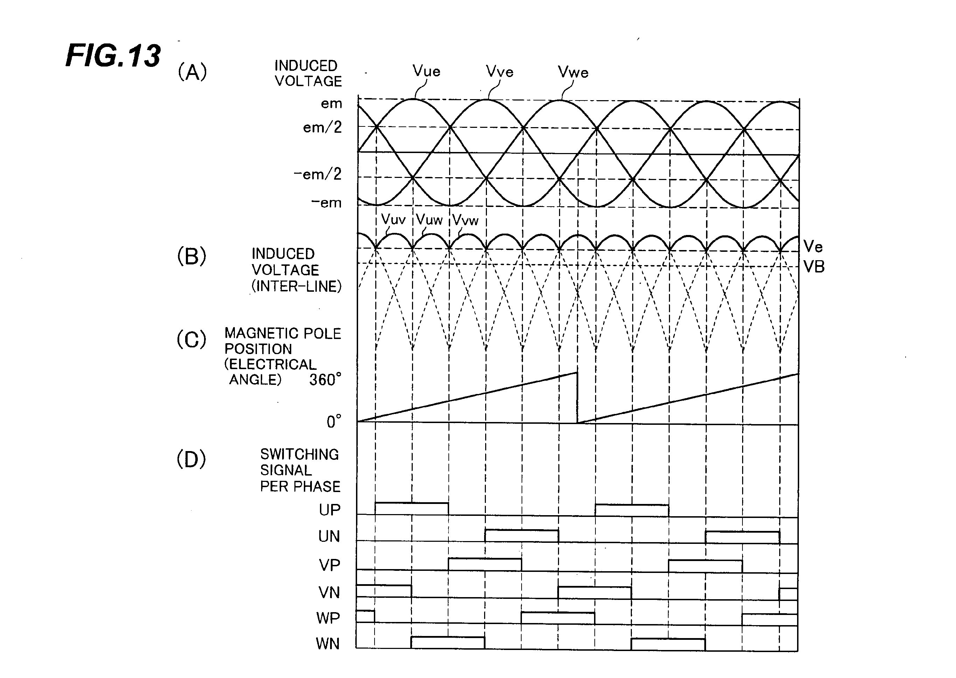

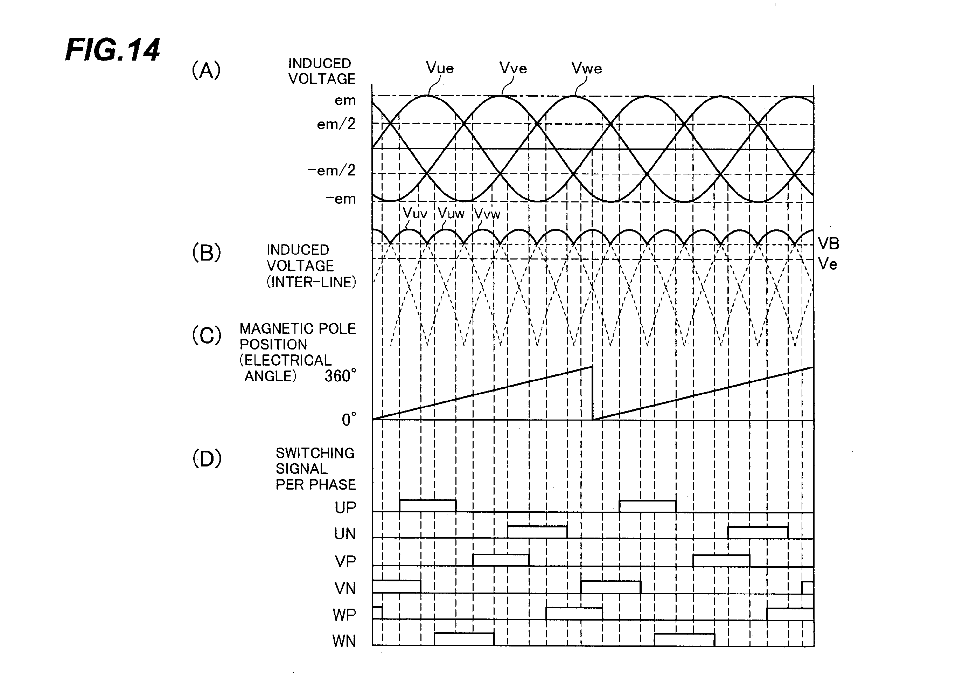

The operation of the pulse cycle computing unit 29 will be described below with reference to Figs. 13 and 14. Fig. 13 is a time chart for explaining the operation when the battery voltage VB is lower than a lower limit Ve of the induced voltage inter-line value, and Fig. 14 is a time chart for explaining the operation when the battery voltage VB is higher than the lower limit Ve of the induced voltage inter-line value. In Figs. 13 and 14, (A) represents waveforms of the induced voltages Vue, Vve and Vwe of the respective phases in the AC motor 9, (B) represents the inter-line values of the induced voltages, (C) represents the magnetic pole position signal $\theta$, and (D) represents waveforms of the pulse signals applied to the switching devices (UP to WN) per phase, which are controlled based on the induced voltages and the battery voltage VB.

Assuming that maximum values Eu0 Ev0 and Ew0 of the induced voltages of the respective phases are each em, the relationships between the magnetic pole position θ and the induced voltages of the respective phases are expressed by the following formulae:

$$Vue = - Eu0 \cdot \sin\theta = - em \cdot \sin\theta \tag{6}$$

$$Vve = - Ev0 \cdot \sin(\theta + 2\pi/3) = - em \cdot \sin(\theta + 2\pi/3) \tag{7}$$

$$Vwe = - Ew0 \cdot \sin(\theta - 2\pi/3) = - em \cdot \sin(\theta - 2\pi/3) \tag{8}$$

Further, as shown at (A) and (B) in Figs. 13 and 14, the time at which the induced voltage inter-line value reaches the lower limit value Ve is the same as the time at which the phase voltage value of the induced voltage becomes em/2.

A description is first made of the operation in the electricity generation mode when the battery voltage VB is lower than the lower limit Ve of the induced voltage inter-line value as shown in Fig. 13. In this case, the rectifying operation is performed such that the switching devices (UP to WN) are successively made conducted in order depending on the magnitudes of the induced voltages Vue, Vve and Vwe for converting the induced voltages into a DC voltage and charging the DC voltage in the DC power source 5. More specifically, the switching devices UP, VP and WP on the upper arm side are successively turned on into the conducted state in the phases where the induced voltages of the respective phases take maximum values. On the other hand, the switching devices UN, VN and WN on the lower arm side are successively turned on into the conducted state in the phases where the induced voltages of the respective phases take minimum values. By thus successively bringing the switching devices into the conducted state depending on the magnitudes of the induced voltages, the rectifying operation is performed and the resulting DC voltage is charged in the DC power source 5.

A description is next made of the operation when the battery voltage VB is higher than the lower limit Ve of the induced voltage inter-line value as shown in Fig. 14. In the case of the battery voltage VB being relatively high as shown in Fig. 14, the switching devices (UP to WN) on the upper arm side are turned on into the conducted state, as seen from Fig. 14, in the phases where the values of the phase voltage values of the induced voltages are maximized and in the range where the induced voltage inter-line values are higher than the battery voltage VB. On the lower arm side, the switching devices (UP to WN) are turned on into the conducted state in the phases where the values of the induced phase voltages are minimized and in the range shown in Fig. 14(D).

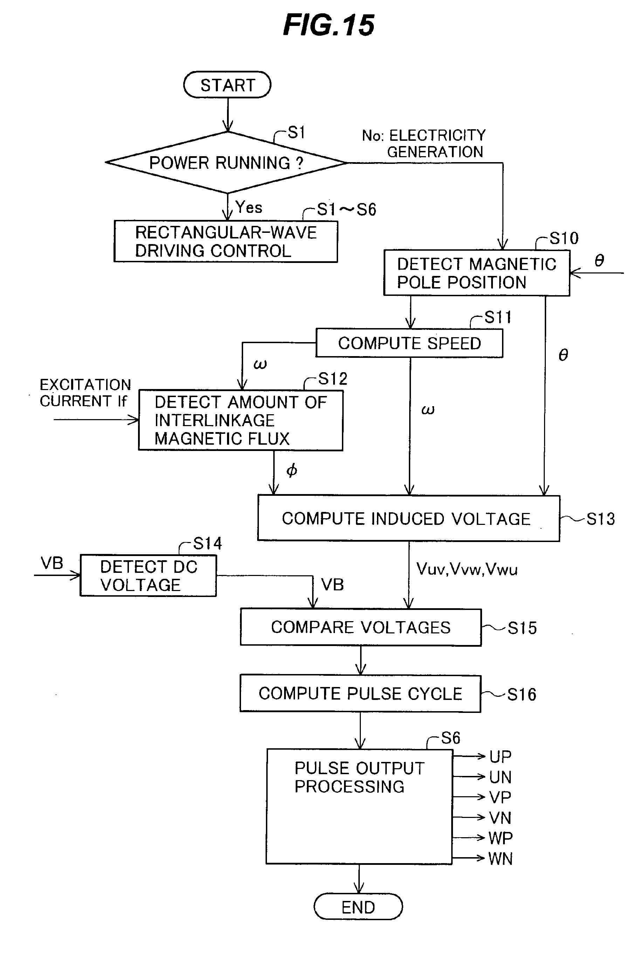

The operation of the synchronous rectification control in the electricity generation mode according to this embodiment of the present invention will be described below with reference to Fig. 15. First, in step S1, it is determined, in accordance with a changeover command signal 18 from the external controller, which one of the power running control and the electricity generation control is to be performed. If the synchronous rectification control is to be performed, the control flow proceeds to step S10. Then, in step S10, the magnetic pole position 6 is computed based on a pulse signal outputted from the magnetic pole position detecting means 13. In step S11, the actual rotation speed ω of the AC motor 9 is computed based on a time-dependent change of the pulse signal outputted from the magnetic pole position detecting means 13. In step S12, the amount of magnetic flux φ interlinking with the armature coils 16 of the stator is computed from both the rotation speed ω computed in step S11 and the excitation current If in the excitation coil 14 of the rotor detected by the excitation driving circuit 15. In this embodiment, a map for the amount of interlinkage magnetic flux φ is prepared in advance from calculations based on experimental results, for example, with the excitation current If and the rotation speed ω being parameters, and the corresponding amount of interlinkage magnetic flux φ is determined from the map.

In step S13, the induced voltages (Vue, Vve, Vwe) of the respective phases are computed from the amount of interlinkage magnetic flux φ, the rotation speed ω and the magnetic pole position θ, which were computed respectively in steps 12, 11 and 10, by using the above formulae (6), (7) and (8). Further, inter-line values (Vuv, Vvw, Vwu) of the induced voltages are computed in accordance with the following formulae:

$$Vuv = Vue - Vve \tag{9}$$

$$Vvw = Vve - Vwe \tag{10}$$

$$Vwu = Vwe - Vue \qquad (11)$$

Then, in step S14, the voltage of the DC power source 5 is detected. In step S15, the battery voltage VB detected in step S14 is compared with the inter-line values (Vuv, Vvw, Vwu) of the induced voltages computed in step S13. Based on the comparison results in step S15, cycles of respective pulses applied to the switching devices (UP to WN) are computed in step S16 as described above in connection with Figs. 13 and 14. Finally, pulse output processing is executed in step S6, whereby the synchronous rectification control is completed.

With this embodiment, in the electricity generation mode, the synchronous rectification control is performed and the generated voltage is rectified by combined use of the switching device and the diode connected to the switching device in anti-parallel relation. Accordingly, a loss during the rectification can be reduced and the efficiency of the electricity generation can be increased. Further, since the switching speed is relatively slow as in the rectangular-wave driving control, a smoothing capacitor is no longer required and the size of the motor control device can be reduced.

In the synchronous rectification control described above, the timings of switching over the switching devices (UP to WN) are computed through steps of computing the induced voltages (Vue, Vve, Vwe) and comparing the inter-line values (Vuv, Vvw, Vwu) of the induced voltages with the battery voltage VB. As an alternative, however, it is also possible to provide means for detecting the potential between two terminals (i.e., the source-drain potential) of each of the switching devices (UP to WN), and to switch over the switching device when the detected potential has become lower than a predetermined value. This modification utilizes the fact that when the current generated by the AC motor 9 is rectified by each switching device, the diode connected to the switching device in anti-parallel relation is made conducted and the potential between two terminals (i.e., the source-drain potential) of the switching device connected to the conducted diode is reduced to a value near the forward voltage of the conducted diode.

The AC motor 9 is coupled to the internal combustion engine 1 through the power transmitting means 2. Even with the internal combustion engine 1 running at idle, therefore, it is required that the AC motor 9 be capable of generating electricity. As described above, the AC motor 9 is capable of generating electricity when the inter-line values (Vuv, Vvw, Vwu) of the induced voltages are higher than the battery voltage VB. Hence, the inter-line values (Vuv, Vvw, Vwu) of the induced voltages in the AC motor 9 must be set to have regions of levels higher than the battery voltage VB even when the internal combustion engine 1 is running at idle.

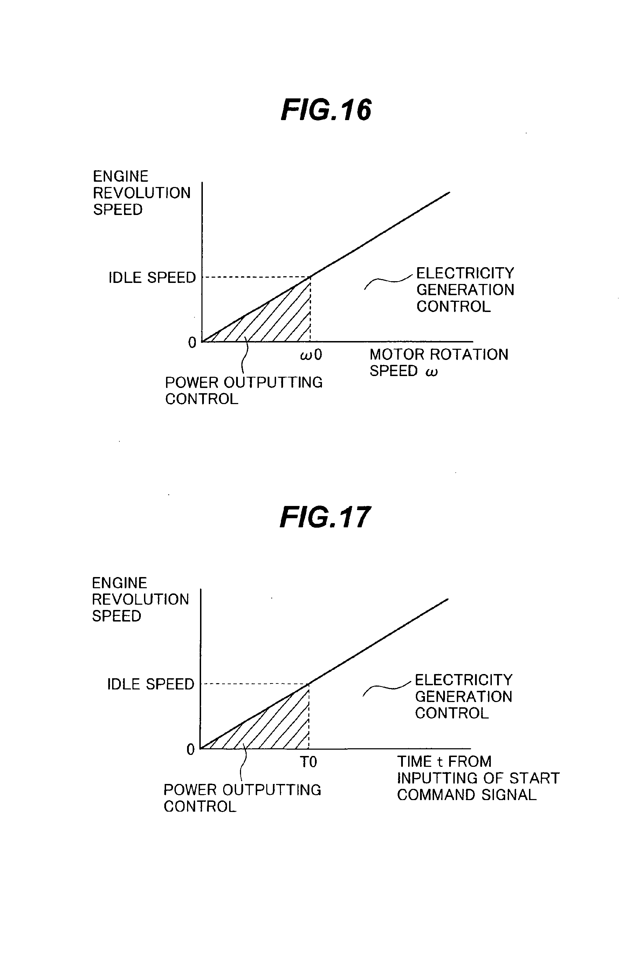

One example of a method for changing over the power running control and the electricity generation control from one to the other will be described below with reference to Fig. 16. In the above description, the power running control and the electricity generation control are changed over from one to the other in accordance with the changeover command signal 18 from the external controller. However, the power running control and the electricity generation control may be changed over in accordance with the rotation speed $\omega$ of the AC motor 9. In this case, as shown in Fig. 16, when the rotation speed $\omega$ of the AC motor 9 is not higher than a predetermined speed $\omega 0$, the power running control is performed, and when it is higher than the predetermined speed $\omega 0$, the electricity generation control is performed. Stated another way, when the rotation speed $\omega$ of the AC motor 9 is in the range of 0 to the predetermined speed $\omega 0$, the power running control is performed to start up the internal combustion engine 1 until the revolution speed of the internal combustion engine 1 increases to an idle speed. Then, when the internal combustion engine 1 comes into a complete firing state and the rotation speed $\omega$ of the AC motor 9 exceeds the predetermined speed $\omega 0$, the mode is changed over to the electricity generation control.

Another example of the method for changing over the power running control and the electricity generation control will be described below with reference to Fig. 17. In this example, the power running control is performed during a period from inputting of a start command signal to the internal combustion engine 1 to a predetermined time t0. After that, the mode is changed over to the electricity generation control. Stated another way, during the period from inputting of the start command signal to the internal combustion engine 1 to the predetermined time t0, the power running control is performed to start up the internal combustion engine 1. When the predetermined time t0 has lapsed, this is judged as indicating that the internal combustion engine 1 is in the complete firing state, and the mode is changed over to the electricity generation control.

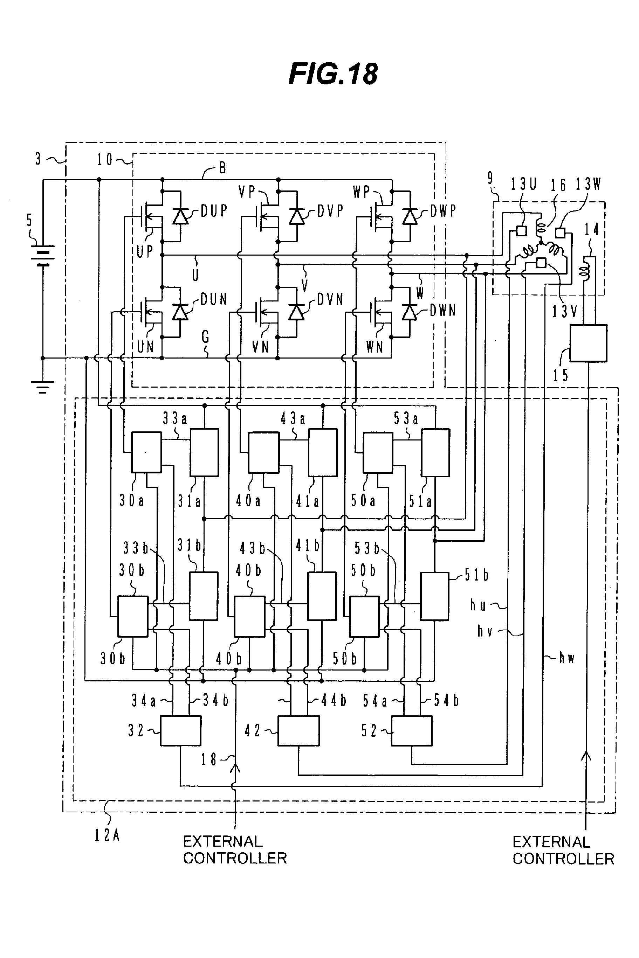

The construction of a motor control system according to another embodiment of the present invention will be described below with reference to Figs. 18 to 29.

A description is first made of the construction of the motor control system using the motor control device according to this embodiment with reference to Fig. 18.

Fig. 18 is a block diagram of the motor control system using the motor control device according to another embodiment of the present invention.

A motor control device 3 according to this embodiment comprises a power module 10 and a power module control circuit 12A. A DC voltage of a battery 5 is converted into an AC voltage by the power module 10, and the AC voltage is supplied to armature coils 16 of a stator of an AC motor 9. Magnetic pole positions of U, V and W phases are detected respectively by a U-phase magnetic pole position detecting means 13U, a V-phase magnetic pole position detecting means 13V, and a W-phase magnetic pole position detecting means 13W. An excitation current flowing through an excitation coil 14 of a rotor of the AC motor 9 is controlled by an excitation current control circuit 15. The excitation current control circuit 15 is controlled by an external controller (host controller). The external controller (host controller) supplies a mode changeover signal 18 to the power module control circuit 12A for changing over the power running mode and the electricity generation mode from one to the other.

In the power module 10, UP denotes a U-phase upper arm MOSFET, DUP denotes a parasitic diode of UP, VP denotes a V-phase upper arm MOSFET, DVP denotes a parasitic diode of VP, WP denotes a W-phase upper arm MOSFET, and DWP denotes a parasitic diode of WP. Respective drains of the MOSFET's are connected in common to a positive pole of the battery 5. Also, UN denotes a U-phase lower arm MOSFET, DUN denotes a parasitic diode of UN, VN denotes a V-phase lower arm MOSFET, DVN denotes a parasitic diode of VN, WN denotes a W-phase lower arm MOSFET, and DWN denotes a parasitic diode of WN. Respective sources of the MOSFET's are connected in common to a negative pole of the battery 5 and are grounded. The source of the U-phase upper arm MOSFET (UP) and the drain of the U-phase lower arm MOSFET (UN) are connected in common and also connected to a U-terminal of the AC motor 9. The source of the V-phase upper arm MOSFET (VP) and the drain of the V-phase lower arm MOSFET (VN) are connected in common and also connected to a V-terminal of the AC motor 9. The source of the W-phase upper arm MOSFET (WP) and the drain of the W-phase lower arm MOSFET (WN) are connected in common and also connected to a W-terminal of the AC motor 9.

In the power module control circuit 12A, a U-phase upper arm drive signal changing-over circuit 30a selectively changes over a power running drive signal 34a and a rectification drive signal 33a in accordance with the mode changeover signal 18, and supplies the selected drive signal to a gate of the U-phase upper arm MOSFET (UP). A U-phase lower arm drive signal changing-over circuit 30b selectively changes over a power running drive signal 34b and a rectification drive signal 33b in accordance with the mode changeover signal 18, and supplies the selected drive signal to a gate of the U-phase lower arm MOSFET (UN).

A U-phase upper arm rectification detecting/driving circuit 31a compares the magnitude of a positive pole voltage VB of the battery with the magnitude of a voltage VU at the U-terminal and generates a positive voltage pulse in the condition of VU > VB. A U-phase lower arm rectification detecting/driving circuit 31b compares the magnitude of the voltage VU at the U-terminal with the magnitude of a negative pole voltage VG (0 V) of the battery and generates a positive voltage pulse in the condition of VU < VG.

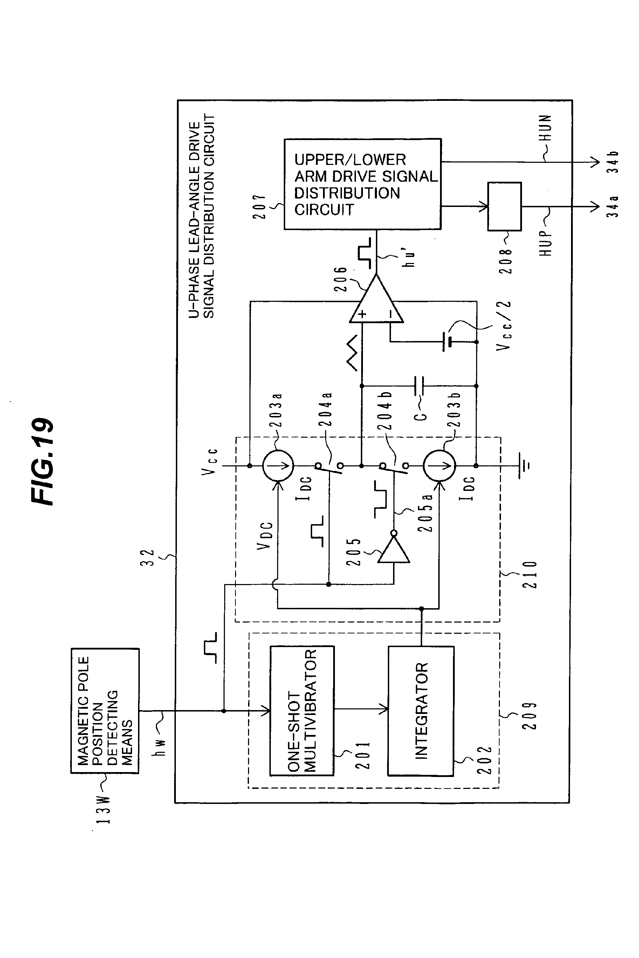

A U-phase lead-angle drive signal distribution circuit 32 generates, in the power running mode, a voltage pulse with a phase leading relative to the phase of an output voltage pulse signal *hu* from the U-phase magnetic pole position detecting means 13U. Although a phase angle advancing method executed by the U-phase lead-angle drive signal distribution circuit 32 is described later with reference to Fig. 19, a voltage pulse with a phase leading in appearance relative to the phase of the output voltage pulse signal *hu* is generated by causing the phase of an output voltage pulse signal *hw* from the W-phase magnetic pole position detecting means 13W to lag depending on the rotation speed of the armature coils 16.

A V-phase upper arm drive signal changing-over circuit 40a selectively changes over a power running drive signal 44a and a rectification drive signal 43a in accordance with the mode changeover signal 18, and supplies the selected drive signal to a gate of the V-phase upper arm MOSFET (VP). A V-phase lower arm drive signal changing-over circuit 40b selectively changes over a power running drive signal 44b and a rectification drive signal 43b in accordance with the mode changeover signal 18, and supplies the selected drive signal to a gate of the V-phase lower arm MOSFET (VN).

A V-phase upper arm rectification detecting/driving circuit 41a compares the magnitude of the positive pole voltage VB of the battery with the magnitude of a voltage VV at the V-terminal and generates a positive voltage pulse in the condition of VV > VB. A V-phase lower arm rectification detecting/driving circuit 41b compares the magnitude of the voltage VV at the V-terminal with the magnitude of the negative pole voltage VG (0 V) of the battery and generates a positive voltage pulse in the condition of VV < VG.

A V-phase lead-angle drive signal distribution circuit 42 generates, in the power running mode, a voltage pulse with a phase leading relative to the phase of an output voltage pulse signal *hv* from the V-phase magnetic pole position detecting means 13V.

A W-phase upper arm drive signal changing-over circuit 50a selectively changes over a power running drive signal 54a and a rectification drive signal 53a in accordance with the mode changeover signal 18, and supplies the selected drive signal to a gate of the W-phase upper arm MOSFET (WP). A W-phase lower arm drive signal changing-over circuit 50b selectively changes over a power running drive signal 54b and a rectification drive signal 53b in accordance with the mode changeover signal 18, and supplies the selected drive signal to a gate of the W-phase lower arm MOSFET (WN).

A W-phase upper arm rectification detecting/driving circuit 51a compares the magnitude of the positive pole voltage VB of the battery with the magnitude of a voltage VW at the W-terminal and generates a positive voltage pulse in the condition of VW > VB. A W-phase lower arm rectification detecting/driving circuit 51b compares the magnitude of the voltage VW at the W-terminal with the magnitude of the negative pole voltage VG (0 V) of the battery and generates a positive voltage pulse in the condition of VW < VG.

A W-phase lead-angle drive signal distribution circuit 52 generates, in the power running mode, a voltage pulse with a phase leading relative to the phase of an output voltage pulse signal *hw* from the W-phase magnetic pole position detecting means 13W.

The circuit operation in this embodiment will be described below. Note that since the operation is the same with respect to the U, V and W phases in this embodiment, a description is made of only the operation in U-phase. The motor control device of this embodiment has two functions of executing power running control and synchronous driving control for the AC motor/AC generator 9.

The power running control will first be described. When a signal for starting the operation for the power running control (i.e., the mode changeover signal 18) from the external controller is inputted to the U-phase upper arm drive signal changing-over circuit 30a, the U-phase upper arm drive signal changing-over circuit 30a selects the power running drive signal 34a and outputs a signal identical to the power running drive signal 34a to the gate of the U-phase upper arm MOSFET (UP). The power running drive signal 34a has a low level at the same potential as that at the U-terminal and has a high level at a potential higher than the threshold of the U-phase upper arm MOSFET (UP). Similarly, when the signal for starting the operation for the power running control (i.e., the mode changeover signal 18) is inputted to the U-phase lower arm drive signal changing-over circuit 30b, the U-phase lower arm drive signal changing-over circuit 30b selects the power running drive signal 34b and outputs a signal identical to the power running drive signal 34b to the gate of the U-phase lower arm MOSFET (UN). The power running drive signal 34b has a low level at the same potential as the negative pole potential VG (0 V) of the battery and has a high level at a potential higher than the threshold of the U-phase lower arm MOSFET (UN). In order to prevent the U-phase upper arm MOSFET (UP) and the U-phase lower arm MOSFET (UN) from turning on at the same time, the power running drive signal 34b takes a low level when the power running drive signal 34a takes a high level, and conversely the power running drive signal 34b takes a high level when the power running drive signal 34a takes a low level. Additionally, depending on an input capacity Ciss and gate resistance Rg of the U-phase upper arm MOSFET (UP) and the U-phase lower arm MOSFET (UN), the power running drive signal 34a and the power running drive signal 34b are set to have a dead time (period during which both the power running drive signals 34a, 34b take a low level concurrently) not shorter than the time constant (product of Ciss and Rg).

The U-phase upper arm MOSFET (UP) and the U-phase lower arm MOSFET (UN) starts switching with the power running drive signals 34a, 34b, respectively, whereupon a current flows into the armature coil 16 and the rotor stars rotation. At the same time, the magnetic pole position detecting means 13U, 13V and 13W for the respective phases detect the magnetic pole positions and then output the voltage pulse signals *hu, hv* and *hw*, respectively. Although the phase relationships among the voltage pulse signals differ depending on the number of magnetic poles of the rotor and mechanical angles of the magnetic pole position detecting means, the high level and the low level of each of the voltage pulse signals *hu, hv* and *hw* are reversed for each 180° of electrical angle in this embodiment. The voltage pulse signal *hw* is applied to the U-phase lead-angle drive signal distribution circuit 32 to delay the phase of the voltage pulse signal *hw* depending on the rotation speed of the armature coil 16. A voltage pulse with a phase leading in appearance relative to the phase of the voltage pulse signal *hu* is thereby generated. The generated voltage pulse is distributed as the upper-arm power running drive signal 34a and the lower-arm power running drive signal 34b. The detailed construction of the U-phase lead-angle drive signal distribution circuit 32 will be described later with reference to Fig. 19. The motor control device operates in such a way for the power running control in the U phase, and it also similarly operates in the other V and W phases.

The operation for the rectification driving control will be described below. When the mode changeover signal 18 is inputted to the U-phase upper arm drive signal changing-over circuit 30a, the U-phase upper arm drive signal changing-over circuit 30a selects the rectification drive signal 33a and outputs a signal identical to the rectification drive signal 33a to the gate of the U-phase upper arm MOSFET (UP). The rectification drive signal 33a has a low level at the same potential as that at the U-terminal and has a high level at a potential higher than the threshold of the U-phase upper arm MOSFET (UP). Similarly, when the mode changeover signal 18 is inputted to the U-phase lower arm drive signal changing-over circuit 30b, the U-phase lower arm drive signal changing-over circuit 30b selects the rectification drive signal 33b and outputs a signal identical to the rectification drive signal 33b to the gate of the U-phase lower arm MOSFET (UN). The rectification drive signal 33b has a low level at the same potential as the negative pole potential VG (0 V) of the battery and has a high level at a potential higher than the threshold of the U-phase lower arm MOSFET (UN).

With the rotation of the rotor, the U-, V- and W-terminals generate positive induced voltages VU, VV and VW, respectively. When the positive pole voltage VB of the battery and the voltage VU at the U-terminal are inputted to the U-phase upper arm rectification detecting/driving circuit 31a, the circuit 31a compares the magnitude of the voltage VB with the magnitude of the voltage VU and generates a positive voltage with respect to the potential VU at the U-terminal as a reference in the condition of VU > VB. The potential difference of this positive voltage provides a voltage Vra higher than the threshold Vth of the U-phase upper arm MOSFET (UP). Also, in the condition of VU ≤ VB, the U-phase upper arm rectification detecting/driving circuit 31a outputs a voltage substantially at the same potential as that at the U-terminal. Thus, the rectification drive signal 33a outputted from the U-phase upper arm rectification detecting/driving circuit 31a is given as a voltage pulse having the voltage Vra (high level) in the condition of VU > VB with the potential at the U-terminal being a reference, and having substantially 0 V (low level) in the condition of VU ≤ VB. The U-phase lower arm rectification detecting/driving circuit 31b operates substantially in a similar manner.

When the voltage VU at the U-terminal and the negative pole voltage VG of the battery are inputted to the U-phase lower arm rectification detecting/driving circuit 31b, the circuit 31b compares the magnitude of the voltage VU with the magnitude of the voltage VG and generates a positive voltage with respect to VG (0 V) as a reference in the condition of VG > VU. The potential difference of this positive voltage provides a voltage Vrb higher than the threshold Vth of the U-phase lower arm MOSFET (UN). Also, in the condition of VG ≤ VU, the U-phase lower arm rectification detecting/driving circuit 31b outputs a voltage substantially at the same potential as VG (0 V). Thus, the rectification drive signal 33b outputted from the U-phase lower arm rectification detecting/driving circuit 31b is given as a voltage pulse having the voltage Vrb (high level) in the condition of VG > VU with VG (0 V) being a reference, and having substantially 0 V (low level) in the condition of VG ≤ VU. Those rectification drive signals 33a, 33b are applied to the gates of the U-phase upper arm MOSFET (UP) and the U-phase lower arm MOSFET (UN) through the U-phase upper arm rectification detecting/driving circuit 31a and the U-phase lower arm rectification detecting/driving circuit 31b, respectively, thereby switching over the U-phase upper arm MOSFET (UP) and the U-phase lower arm MOSFET (UN). The motor control device operates in such a way for the MOS rectification driving control in the U phase, and it also similarly operates in the other V and W phases.

With the operation described above, in the power running mode, the phases of the magnetic pole position voltage pulses are advanced and the switching devices for the respective phases are switched over by the advanced voltage pulses. Therefore, the currents of the respective phases are advanced in phase relative to the induced voltages of the respective phases. As a result, high torque can be obtained even at high rotation speeds. Further, the rectification efficiency can be increased by utilizing the MOS rectification.

The construction and operation of the U-phase lead-angle drive signal distribution circuit 32 used in the motor control device of this embodiment will be described below with reference to Figs. 19 to 25. Although the following description is made of, by way of example, the operation of the U-phase lead-angle drive signal distribution circuit 32 for the convenience of explanation, a V-phase lead-angle drive signal distribution circuit 42 and a W-phase lead-angle drive signal distribution circuit 52 also have similar constructions and operations.

With reference to Fig. 19, a description is first made of the construction of the U-phase lead-angle drive signal distribution circuit 32 used in the motor control device according of this embodiment.

Fig. 19 is a block diagram of the lead-angle drive signal distribution circuit used in the motor control device according to another embodiment of the present invention.

A frequency-voltage (f-V) converter 209 comprises a one-shot multivibrator 201 and an integrator 202. The one-shot multivibrator 201 detects the rising of the voltage pulse signal *hw* outputted from the magnetic pole position detecting means 13W, and then outputs a voltage pulse having a predetermined pulse width TW1. Assuming the width of the pulse outputted from the magnetic pole position detecting means 13W to be TW2, there is a relationship of TW1 < TW2. The integrator 202 receives the voltage pulse outputted from the one-shot multivibrator 201 and integrates it over time, thereby outputting a DC voltage $V_{DC}$. Thus, the frequency-voltage (f-V) converter 209 produces a voltage signal $V_{DC}$ in proportion to the frequency of the voltage pulse signal *hw* outputted from the magnetic pole position detecting means 13W, i.e., the rotation speed of the AC motor 9.

A capacity charging/discharging current source 210 comprises a capacity charging current source 203a, a capacity discharging current source 203b, a capacity charging switch 204a, and a capacity charging switch 204b, and an inverter 205. The capacity charging current source 203a delivers a DC current from a power source $V_{CC}$, which is supplied to operate the U-phase lead-angle drive signal distribution circuit 32, depending on the voltage value of the DC voltage $V_{DC}$ The capacity discharging current source 203b draws a DC current depending on the voltage value of the DC voltage $V_{DC}$. The capacity charging switch 204a receives the voltage pulse signal *hw* and makes switching of the output current from the capacity charging current source 203a. The inverter 205 receives the voltage pulse signal *hw* and outputs an inverted one 205a of the inputted voltage pulse signal. The capacity discharging switch 204b receives the inverted voltage pulse signal outputted from the inverter 205 and makes switching of the output current from the capacity discharging current source 203b.

A capacity C integrates the DC current and generates a triangular wave. The slope of the triangular wave changes depending on the voltage value of the DC voltage $V_{DC}$, i.e., the rotation speed of the AC motor. The higher the rotation speed of the AC motor, the larger is the slope of the triangular wave. A comparator 206 receives the triangular wave at its non-inverting input terminal and a reference voltage ($V_{CC}/2$) at its inverting input terminal, and compares those two voltage values, thereby outputting an output voltage pulse *hu'*.

An upper/lower arm drive signal distribution circuit 207 distributes the voltage pulse *hu'* as an upper arm drive signal and a lower arm drive signal. Namely, it outputs an upper arm drive signal 207a and the lower-arm power running drive signal 34b. A level shift-up circuit 208 converts a reference voltage level of the upper arm drive signal 207a from VG (0 V) into VU. An output voltage of the level shift-up circuit 208 serves as the upper-arm power running drive signal 34a. Incidentally, the upper-arm power running drive signal 34a is the voltage pulse signal described above with reference to Fig. 18.

The one-shot multivibrator 201 is a generally used circuit and can be constituted by, e.g., a universal IC or a bipolar transistor. The integrator 202 may be formed using an operational amplifier. The upper/lower arm drive signal distribution circuit 207 can be constituted by a general logic gate. Further, the level shift-up circuit 208 can be easily formed using a switching element and a resistor.

The construction and operation of a phase angle advancing circuit in the U-phase lead-angle drive signal distribution circuit 32 will be described below.

When the voltage pulse *hw* is inputted to the one-shot multivibrator 201, the one-shot multivibrator 201 detects the rising of the voltage pulse *hw* and generates a voltage pulse that sustains a high level for a period of the pulse width TW1 (sec) (TW1 < TW2) from the time of the rising. Assuming that the voltage pulse *hw* has the frequency $f$ (Hz) (> 0), the pulse width TW2 (sec), and the duty of 50%, TW2 = 1/(2f) is resulted and the frequency of the voltage pulse outputted from the one-shot multivibrator 201 remains $f$, i.e., the same as that of the voltage pulse *hw.* Thus, the one-shot multivibrator 201 has the function of converting the voltage pulse *hw* into a voltage pulse having the frequency $f$ and the pulse width TW1. The one-shot multivibrator itself is known as a general universal analog IC. In general, the pulse width TW1 can be optionally set with the time constant defined by an external capacity and resistance. When the voltage pulse is inputted to the integrator 202, it is integrated over time and converted into the DC voltage $V_{DC}$. The frequency $f$ and the DC voltage $V_{DC}$ are proportional to each other and expressed by:

$$V_{DC} = kf \ (k > 0) \qquad\qquad ...(13)$$

$$= V_H \bullet TW1/T$$

$$= V_H \bullet TW1 \bullet f$$

In the above formula, $V_H$ is the high level voltage of the voltage pulse *hw.* The frequency-voltage converter 209 comprising the one-shot multivibrator 201 and the integrator 202 may be constituted by a general universal analog IC.

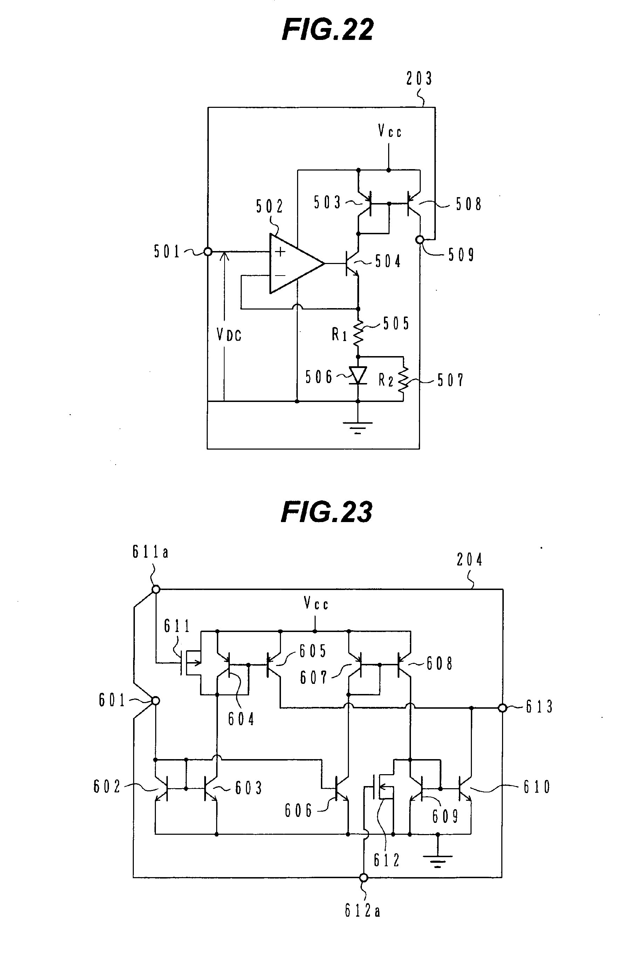

The output $V_{DC}$ of the integrator 202 is applied to the capacity charging current source 203a and the capacity discharging current source 203b for conversion into a constant current $I_{DC}$ The relationship between $V_{DC}$ and $I_{DC}$ is described later with reference to Fig. 22. When the capacity charging switch 204a is turned on by the voltage pulse signal *hw,* the constant current $I_{DC}$ is charged in the capacity C, and when the capacity charging switch 204b is turned on by the inverted voltage pulse signal 205a of the voltage pulse signal *hw,* the constant current $I_{DC}$ is discharged from the capacity C. Assuming that the time until the charged voltage reaches $V_{CC}/2$ from the start of charging into the capacity C is Td (sec), the following relationship holds:

$$I_{DC} = C \bullet V_{CC}/(2Td) \qquad\qquad (14)$$

As a result of repeating the charging and discharging into and from the capacity C, a triangular wave is generated and applied to the non-inverting input terminal of the comparator 206. In the comparator 206, the voltage of the triangular wave is compared with the reference voltage $V_{CC}/2$ on the non-inverting input terminal. Then, the comparator 206 outputs a voltage $V_{CC}$ (high level) when the voltage at the non-inverting input terminal is larger than $V_{CC}/2$, and outputs a voltage 0 V (low level) when the voltage at the non-inverting input terminal is smaller than or equal to $V_{CC}/2$. Accordingly, the voltage pulse *hu'* outputted from the comparator 206 is delayed Td in phase relative to the voltage pulse *hw.* The delay time Td is converted into an electrical angle 6d (degree) as follows:

$$\theta d = 360 \bullet Td \bullet f \qquad\qquad (15)$$

While the phase of the voltage pulse *hu'* lags θd (degree) relative to the phase of the voltage pulse *hw,* it is supposed that the phase of the voltage pulse *hu'* leads θc (degree) relative to the phase of the voltage pulse *hu.* Because the phase of the voltage pulse *hw* leads 120 (degrees) relative to the phase of the voltage pulse *hu,* the following formula

is obtained:

$$\theta c = \theta d - 120 \qquad (16)$$

Using the formulae (13), (14) and (15), the formula (16) is modified into:

$$\theta c = \{360 \cdot C \cdot V_{CC} \cdot f/(2I_{DC})\} - 120 \qquad (17)$$

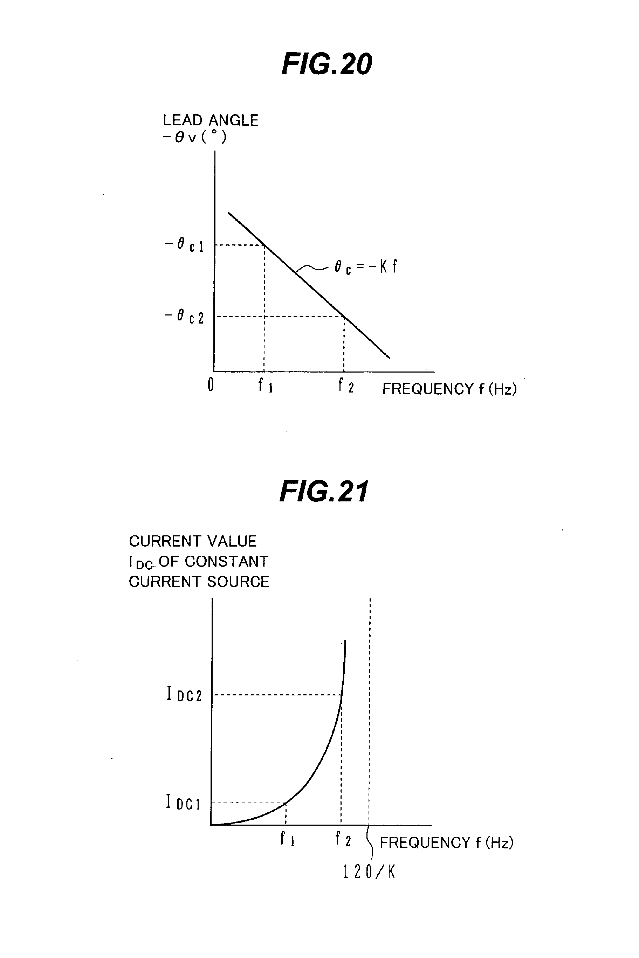

With reference to Fig. 20, a description is now made of the relationship between the rotation frequency and the lead angle, which is provided by the lead-angle drive signal distribution circuit 32 used in the motor control device of this embodiment.

Fig. 20 is a graph for explaining the relationship between the rotation frequency and the lead angle, which is provided by the lead-angle drive signal distribution circuit used in the motor control device according to another embodiment of the present invention.

Assuming, as shown in Fig. 20, that the following relationship holds between $\theta c$ and $f$,

$$\theta c = - Kf \; (K > 0, f1 > 0) \qquad (18)$$

the relationship between $I_{DC}$ and $f$ is expressed as follows from the formula (17);

$$I_{DC} = 180 \cdot C \cdot V_{CC} \cdot f/(120 - Kf) \qquad (19)$$

where $Kf < 120$ must be satisfied.

With reference to Fig. 21, a description is now made of the relationship between the rotation frequency and a current value of a constant current source, which is provided by the lead-angle drive signal distribution circuit 32 used in the motor control device of this embodiment.

Fig. 21 is a graph for explaining the relationship between the rotation frequency and a current value of a constant current source, which is provided by the lead-angle drive signal distribution circuit used in the motor control device according to another embodiment of the present invention.

Fig. 21 plots a curve representing the formula (19). The curve is defined in the range of $0 < f < 120/K$ and is downwardly convexed. By designing the constant current sources 203a and 203b so as to satisfy the relationship of the formula (19), therefore, the relationship of the formula (18) always holds and the phase $\theta c$ leads a larger angle as the frequency $f$ increases.

With the lead-angle drive signal distribution circuit constructed as described above, in the power running mode, the phases of the magnetic pole position voltage pulses are advanced and the switching devices for the respective phases are switched over by the advanced voltage pulses.

Therefore, the currents of the respective phases are advanced in phase relative to the induced voltages of the respective phases. As a result, high torque can be obtained even at high rotation speeds.

With reference to Fig. 22, a description is now made of the construction of the constant current source 203 (203a or 203b) used in the lead-angle drive signal distribution circuit 32 of the motor control device of this embodiment.

Fig. 22 is a circuit diagram of the constant current source used in the lead-angle drive signal distribution circuit of the motor control device according to another embodiment of the present invention.

Because the current characteristic shown in Fig. 21 is similar to a voltage-current characteristic of a diode, the constant current sources 203a, 203b used in this embodiment are each formed by utilizing an exponential function characteristic of a diode. Note that the construction shown in Fig. 22 is merely one example of a constant current source circuit corresponding to the equation (19), and any other suitable circuit can also be used instead.

The DC voltage $V_{DC}$ is inputted to a voltage input terminal 501. The constant current source 203 comprises an operational amplifier 502, a first pnp-transistor 503, an npn-transistor 504, a first resistor 505, a diode 506, a second resistor 507, a second pnp-transistor 508, and an output terminal 509 from which a DC current is outputted.

The operational amplifier 502 operates with the power source $V_{CC}$. It has a non-inverting input terminal connected to the voltage input terminal 501, an inverting input terminal connected to an emitter of the npn-transistor 504, an output terminal connected to a base of the npn-transistor 504. One terminal of the first resistor 505 is connected to the emitter of the npn-transistor 504, and the other terminal thereof is connected to an anode of the diode 506 and one terminal of the second resistor 507. Further, a cathode of the diode 506 is connected to the other terminal of the second resistor 507 and is also grounded. The first pnp-transistor 503 and the second pnp-transistor 508 constitute a current mirror circuit.

The operation of the constant current source 203 will be described below. When the DC voltage $V_{DC}$ is inputted to the voltage input terminal 501, the operational amplifier 502 operates so as to hold the voltage at the non-inverting input terminal thereof to be $V_{DC}$, and hence the emitter voltage of the npn-transistor 504 also becomes $V_{DC}$. Accordingly, a current I flows through the first resistor 505 and the second resistor 507.

Assuming that the resistance values of the first resistor 505 and the second resistor 507 are R1 and R2, respectively, and the turning-on voltage of the diode 506 is Vd, a current flowing through the first resistor 505 is expressed by I1 = $V_{DC}$/(R1 + R2) in the condition of I $\times$ R2 < Vd. Also, the operational amplifier 502 delivers a current to the base of the npn-transistor 504, thus causing the npn-transistor 504 to operate. If the npn-transistor 504 has a sufficiently large current amplification factor $h_{FE}$ (e.g., 300 or more), a collector current is almost equal to the emitter current. Therefore, the collector current also becomes I1. This current I1 is delivered from the output terminal 509 through the current mirror circuit.

In the condition of I1 $\times$ R2 $\geq$ Vd, since the diode 506 is turned on, the current flowing through the first resistor 505 is expressed by I2 = ($V_{DC}$ - Vd)/R2. This current I2 is likewise delivered from the output terminal 509 through the current mirror circuit. Thus, when $V_{DC}$ < Vd $\times$ (R1 + R2)/R2 is satisfied, the current I1 = $V_{DC}$/(R1 + R2) is delivered from the output terminal 509, and when $V_{DC}$ $\geq$ Vd $\times$ (R1 + R2)/R2 is satisfied, the current I2 = ($V_{DC}$ - Vd)/R2 is delivered from the output terminal 509. By eliminating $V_{DC}$ in those formula based on the formula (13), $I_{DC}$ can be expressed as follows:

In the case of

$$f < Vd \times (R1 + R2)/(kR2)$$

$$I_{DC} = kf/(R1 + R2) \tag{20}$$

In the case of

$$f \geq Vd \times (R1 + R2)/(kR2)$$

$$I_{DC} = (kf - Vd)/R2 \tag{21}$$

By adjusting R1 and R2 in the above formulae, a curve close to that represented by the formula (19) can be realized. Incidentally, from the formula (13), k = $V_H$•TW1 is given in which $V_H$ is the high level voltage of the voltage pulse *hw.*

With reference to Fig. 23, a description is now made of the construction of the capacity charging switch 204a and the capacity discharging switch 204b both used in the lead-angle drive signal distribution circuit 32 of the motor control device of this embodiment.

Fig. 23 is a circuit diagram of the capacity charging switch and the capacity discharging switch both used in the lead-angle drive signal distribution circuit of the motor control device according to another embodiment of the present invention. Note that the construction shown in Fig. 23 is merely one example of the capacity charging switch and the capacity discharging switch, and any other suitable circuit can also be used instead.

A switch circuit 204 comprises a constant current input terminal 601, a first npn-transistor 602, a second npn-transistor 603, a first pnp-transistor 604, a second pnp-transistor 605, a third npn-transistor 606, a third pnp-transistor 607, a fourth pnp-transistor 608, a fourth npn-transistor 609, a fifth npn-transistor 610, a first pMOS-transistor 611, and a first nMOS-transistor 612. Numeral 611a denotes a gate terminal of the first pMOS transistor 611, 612a denotes a gate terminal of the first nMOS transistor 612, and 613 denotes a constant current output terminal.

The constant current input terminal 601 is connected to the output terminal 509 shown in Fig. 22. The gate terminals 611a, 612a are both connected to the output *hw* of the magnetic pole position detecting means 13W shown in Fig. 19. The first npn-transistor 602, the second npn-transistor 603, and the third npn-transistor 606 constitute a current mirror circuit drawing the same current as the DC current $I_{DC}$, which is inputted from the constant current input terminal 601, through a collector terminal of the second npn-transistor 603. Also, this current mirror circuit similarly draws the same current as the DC current $I_{DC}$, which is inputted from the constant current input terminal 601, through a collector terminal of the third npn-transistor 606.

The first pnp-transistor 604 and the second pnp-transistor 605 constitute a current mirror circuit. An emitter of the first pnp-transistor 604 is connected to a source of the first pMOS-transistor 611, and a collector of the first pnp-transistor 604 is connected to a drain of the first pMOS-transistor 611. The first pMOS-transistor 611 serves to turn on/off the current $I_{DC}$ flowing in this current mirror circuit. This current mirror circuit and the first pMOS-transistor 611 cooperatively realize the function of the charging constant current switch.

When the voltage pulse *hw* outputted from the magnetic pole position detecting means 13W has a high level, the potential difference between the gate and source of the first pMOS-transistor 611 is substantially zero and hence the first pMOS-transistor 611 is turned off. At this time, if the current $I_{DC}$ flows in the collector of the first pnp-transistor 604, a voltage Vd (about 0.7 V) generates between the emitter and the base of the first pnp-transistor 604. As a result, the voltage Vd (about 0.7 V) is also applied between the emitter and the base of the second pnp-transistor 605, whereby the second pnp-transistor 605 is turned on and the current $I_{DC}$ flows into the collector of the second pnp-transistor 605.

On the other hand, when the voltage pulse *hw* outputted from the magnetic pole position detecting means 13W has a low level, the potential difference between the gate and source of the first pMOS-transistor 611 is increased and the first pMOS-transistor 611 is turned on when the potential difference exceeds the threshold of the first pMOS-transistor 611. At this time, even if the current $I_{DC}$ flows in the collector of the first pnp-transistor 604, there generates just substantially zero voltage between the emitter and the base of the first pnp-transistor 604. As a result, the voltage between the emitter and the base of the second pnp-transistor 605 also becomes substantially zero, whereby the second pnp-transistor 605 is turned off and no current flows into the collector of the second pnp-transistor 605.

Thus, this current mirror circuit is turned on and off depending on the voltage pulse *hw,* thus causing the current $I_{DC}$ to be delivered to the constant current output terminal or stopped.

The third pnp-transistor 607 and the fourth pnp-transistor 608 constitute a current mirror circuit delivering the same current as the DC current $I_{DC}$ which is drawn from the collector of the third npn-transistor 607, through a collector of the fourth pnp-transistor 608. This current mirror circuit is intended to produce the delivery current $I_{DC}$ for use in the discharging constant current switch of the next stage. The fourth npn-transistor 609 and the fifth npn-transistor 610 constitute a current mirror circuit. An emitter of the fourth npn-transistor 609 is connected to a source of the first nMOS-transistor 612, and a collector of the fourth npn-transistor 609 is connected to a drain of the first nMOS-transistor 612. The first nMOS-transistor 612 serves to turn on/off the current $I_{DC}$ flowing in this current mirror circuit. This current mirror circuit and the first nMOS-transistor 612 cooperatively realize the function of the discharging constant current switch.

When the voltage pulse *hw* outputted from the magnetic pole position detecting means 13W has a high level, the potential difference between the gate and source of the first nMOS-transistor 612 is increased and the first nMOS-transistor 612 is turned on when the potential difference exceeds the threshold of the first nMOS-transistor 612. At this time, even if the current $I_{DC}$ flows in the collector of the fourth npn-transistor 609, there generates just substantially zero voltage between the emitter and the base of the fourth npn-transistor 609. As a result, the voltage between the emitter and the base of the fifth npn-transistor 610 also becomes substantially zero, whereby the fifth npn-transistor 610 is turned off and no current flows into the collector of the fifth npn-transistor 610.

On the other hand, when the voltage pulse *hw* outputted from the magnetic pole position detecting means 13W has a low level, the potential difference between the gate and source of the first nMOS-transistor 612 is substantially zero and hence the first nMOS-transistor 612 is turned off. At this time, if the current $I_{DC}$ flows in the collector of the fourth npn-transistor 609, a voltage Vd (about 0.7 V) generates between the emitter and the base of the fourth npn-transistor 609. As a result, the voltage Vd (about 0.7 V) is also applied between the emitter and the base of the fifth npn-transistor 610, whereby the fifth npn-transistor 610 is turned on and the current $I_{DC}$ flows into the collector of the fifth npn-transistor 610.

Thus, this current mirror circuit is turned on and off depending on the voltage pulse *hw,* thus causing the current $I_{DC}$ to be drawn from the constant current output terminal or stopped.

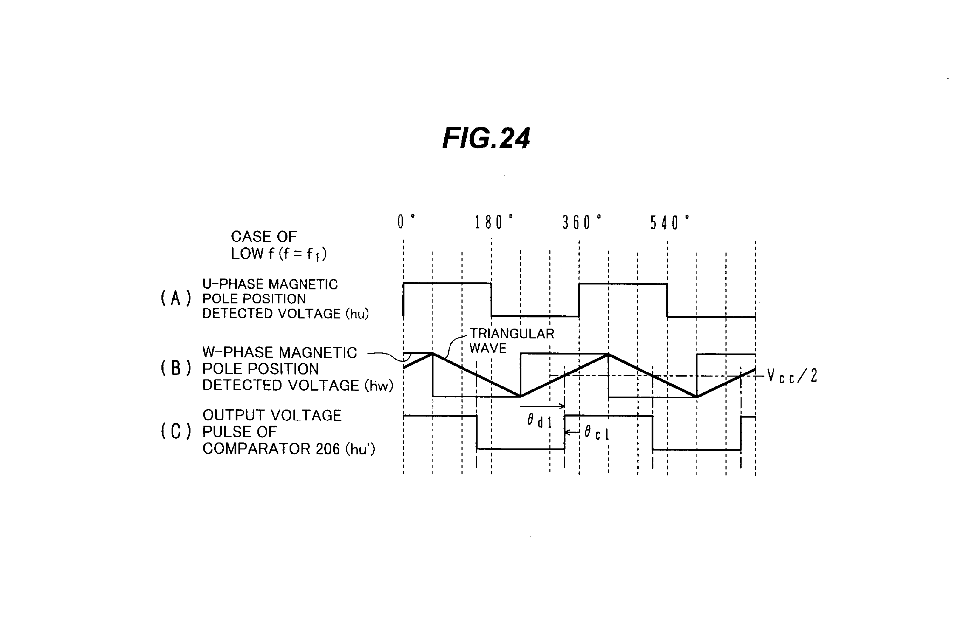

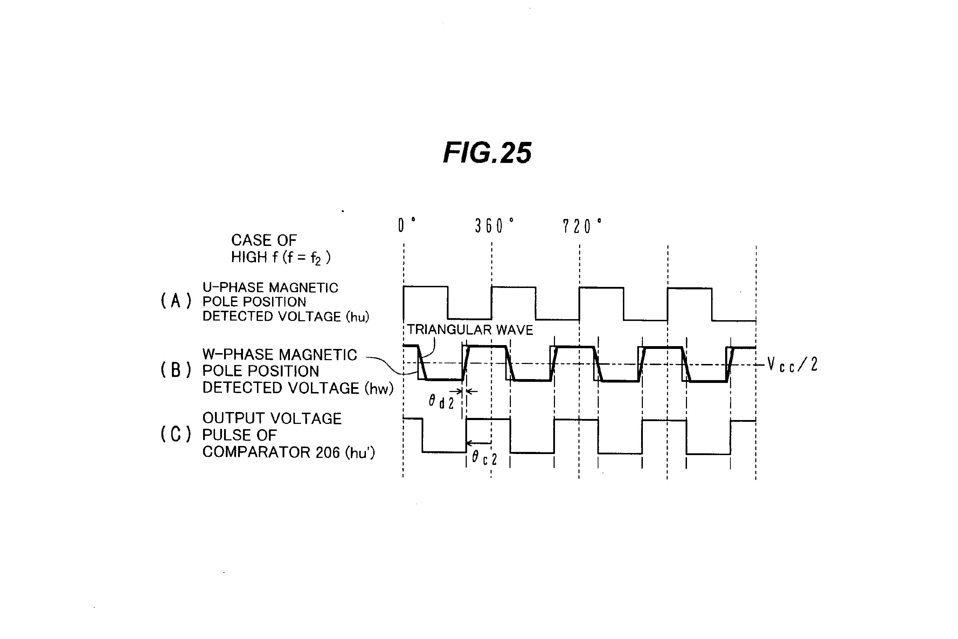

The operation of the lead-angle drive signal distribution circuit 32 of the motor control device of this embodiment will be described below with reference to Figs. 24 and 25.

Figs. 24 and 25 are each a waveform chart showing the operation of the lead-angle drive signal distribution circuit of the motor control device according to another embodiment of the present invention. Fig. 24 shows the angle advancing operation in the case of the frequency *f* being low (f = f1). Fig. 25 shows the angle advancing operation in the case of the frequency *f* being high (f = f2).

With reference to Fig. 24, a description is first made of the angle advancing operation in the case of the low frequency *f* (f = f1). (A) in Fig. 24 represents the waveform of the voltage pulse *hu,* (B) in Fig. 24 represents the waveforms of the voltage pulse *hw* and a triangular wave, and (C) in Fig. 24 represents the waveform of the voltage pulse *hu'* outputted from the comparator 206.

The phase of the voltage pulse *hw* shown in Fig. 24(B) leads 120° relative to the phase of the voltage pulse *hu* shown in Fig. 24(A). The triangular wave shown in Fig. 24(B) is a voltage pulse applied to the non-inverting input terminal of the comparator 206 shown in Fig. 19. The comparator 206 compares the triangular wave voltage with the reference voltage $V_{CC}/2$ applied to the inverting input terminal thereof, and outputs the voltage pulse *hu'* as shown in Fig. 24(C).

The phase of the voltage pulse *hu'* shown in Fig. 24(C) leads θc1 relative to the phase of the voltage pulse *hu* shown in Fig. 24(A). The lead angle θc1 at the frequency f1 is given by θc1 = - Kf1. K can be obtained by eliminating $I_{DC}1$ based on $I_{DC}1 = 180 \cdot C \cdot V_{CC} \cdot f1/(120 - Kf1)$ derived from the formula (19), $I_{DC}1 = kf1/(R1 + R2)$ derived from the formula (20), and $k = V_H \cdot TW1$ derived from the formula (13). Note that although the lead angle θc1 is here determined for the constant current circuit shown in Fig. 22, the formula for determining the lead angle becomes different one when a circuit other than that described above is employed. Also, the formula (20) is applied on condition that f1 satisfies f1 < Vd x(R1 + R2)/(kR2).

With reference to Fig. 25, a description is next made of the angle advancing operation in the case of the high frequency *f* (f = f2). (A) in Fig. 25 represents the waveform of the voltage pulse *hu,* (B) in Fig. 25 represents the waveforms of the voltage pulse *hw* and a triangular wave, and (C) in Fig. 25 represents the waveform of the voltage pulse *hu'* outputted from the comparator 206. For the purpose of comparison with the case of Fig. 24, Fig. 25 shows an example in which the frequency is twice that shown in Fig. 24.

The phase of the voltage pulse *hw* shown in Fig. 25(B) leads 120° relative to the phase of the voltage pulse *hu* shown in Fig. 25(A). The triangular wave shown in Fig. 25(B) is a voltage pulse applied to the non-inverting input terminal of the comparator 206 shown in Fig. 19. The comparator 206 compares the triangular wave voltage with the reference voltage $V_{CC}/2$ applied to the inverting input terminal thereof, and outputs the voltage pulse *hu'* as shown in Fig. 25(C).

When the frequency is high, the current value $I_{DC}$ of the constant current source is increased, as shown in Fig. 21, so that the slope of the triangular wave becomes steeper and the lead angle θc is increased in comparison with that in the case of Fig. 24. The phase of the voltage pulse *hu'* leads θc2 relative to the phase of the voltage pulse *hu.* The lead angle θc2 at the frequency f2 is given by θc2 = - Kf2. K can be obtained by eliminating $I_{DC}2$ based on $I_{DC}2 = 180 \cdot C \cdot V_{CC} \cdot f2/(120 - Kf2)$ derived from the formula (19), $I_{DC}2 = (kf2 - Vd)/R2$ derived from the formula (21), and $k = V_H \cdot TW1$ derived from the formula (13). Note that although the lead angle θc2 is here determined for the constant current circuit shown in Fig. 22, the formula for determining the lead angle becomes different one when a circuit other than that described above is employed. Also, the formula (21) is applied on condition that f2 satisfies f2 ≥ Vd × (R1 + R2)/(kR2). However, the formula (20) must be applied in the case of f2 < Vd × (R1 + R2)/(kR2).

In such a way, the relationship between the frequency and the lead angle, shown in Fig. 20, can be realized.

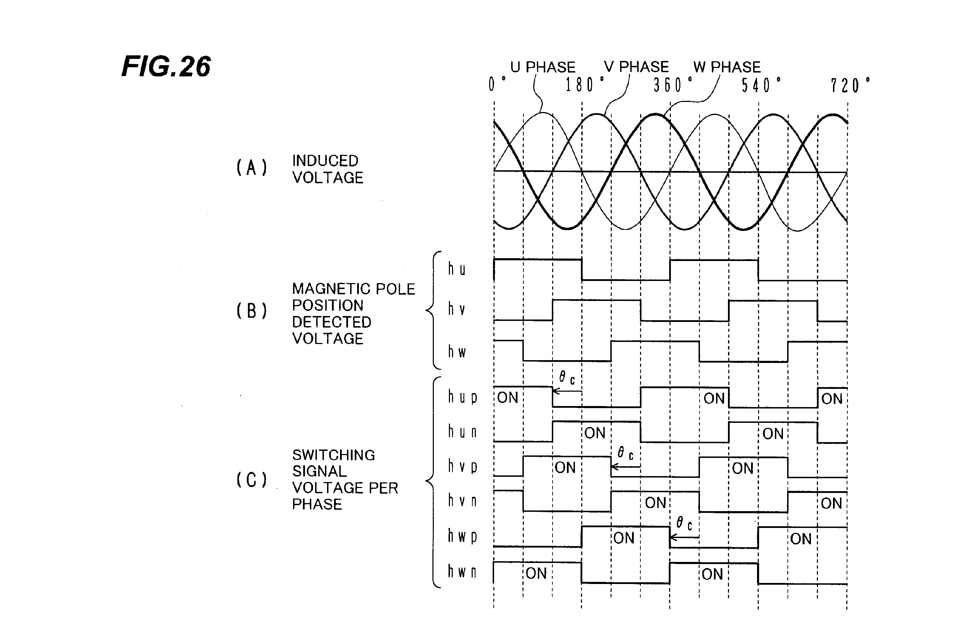

With reference to Fig. 26, a description will be made of MOSFET gate drive signals of the U, V and W phases in the power running control when the motor control device of this embodiment is employed.

Fig. 26 is a waveform chart of MOSFET gate drive signals of the U, V and W phases in the power running control when the motor control device according to another embodiment of the present invention is employed.

Corresponding to the induced voltages of the respective phases shown in Fig. 26(A), magnetic pole position detected voltages *hu, hv* and *hw* of the respective phases are generated as shown in Fig. 26(B). The phases of those voltage pulses are shifted from one another by 120°. Voltage pulses *hup* and *hun,* shown in Fig. 26(C), serve as drive signals for the U-phase upper arm MOSFET and lower arm MOSFET. In response to each of those voltage pulses, the corresponding MOSFET is turned on when the voltage pulse has a high level, and is turned off when the voltage pulse has a low level. Also, the voltage pulse *hun* takes a low level when the voltage pulse *hup* takes a high level, and conversely the voltage pulse *hun* takes a high level when the voltage pulse *hup* takes a low level. In addition, to prevent the upper arm MOSFET and the lower arm MOSFET from turning on at the same time, those voltage pulses are set to have a period (i.e., a dead time) during which both the voltage pulses are turned off at the same time. The phase of the voltage pulse *hup* leads θc relative to the phase of the voltage pulse *hun.* Similarly, voltage pulses *hvp* and *hvn* serve as drive signals for the V-phase upper arm MOSFET and lower arm MOSFET, respectively, and voltage pulses *hwp* and *hwn* serve as drive signals for the W-phase upper arm MOSFET and lower arm MOSFET, respectively.

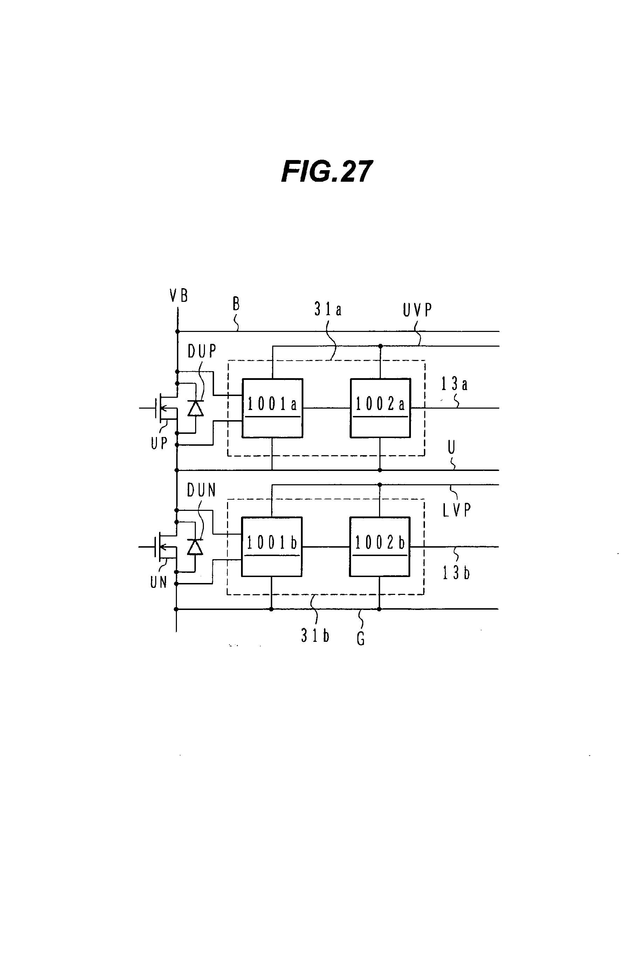

The construction of the rectification detecting/driving circuit 31 (31a or 31b) used in the motor control device of this embodiment will be described below with reference to Fig. 27.

Fig. 27 is a block diagram of the rectification detecting/driving circuit used in the motor control device according to another embodiment of the present invention. The following description is made of the basic constructions and operations of the U-phase upper arm rectification detecting/driving circuit 31a and the U-phase lower arm rectification detecting/driving circuit 31b shown in Fig. 18, the V-and W-phase rectification detecting/driving circuits also have similar basic constructions and operations.

The rectification detecting/driving circuit 31a comprises a U-phase upper-arm negative voltage detection circuit 1001a and a U-phase upper-arm voltage amplification circuit 1002a. The rectification detecting/driving circuit 31b comprises a U-phase lower-arm negative voltage detection circuit 1001b and a U-phase lower-arm voltage amplification circuit 1002b. Additionally, UVP denotes an upper arm power source, and LVP denotes a lower arm power source. The upper arm power source UVP outputs a predetermined voltage with respect to the U-terminal as a reference. The lower arm power source LVP outputs a predetermined voltage with respect to the G-terminal as a reference. Other symbols denote the same components as those shown in Fig. 18.

The U-phase upper-arm negative voltage detection circuit 1001a compares the magnitude of the voltage VB at the B-terminal with the magnitude of the voltage VU at the U-terminal, and outputs a compared result, i.e., (VB - VU). In the condition of VU ≤ VB, the U-phase upper-arm negative voltage detection circuit 1001a outputs a positive voltage with respect to the U-terminal, and in the condition of VU > VB, it outputs a negative voltage with respect to the U-terminal. The U-phase upper-arm negative voltage detection circuit 1001a can be realized, for example, by a subtracter using an operational amplifier.

Also, the U-phase upper-arm voltage amplification circuit 1002a amplifies a negative voltage portion of an output of the U-phase upper-arm negative voltage detection circuit 1001a to the threshold voltage of the U-phase upper arm MOSFET. The U-phase upper-arm voltage amplification circuit 1002a can be realized, for example, by a half-wave rectification circuit and an amplification circuit using an operational amplifier.

On the other hand, the U-phase lower-arm negative voltage detection circuit 1001b compares the magnitude of the voltage VG at the G-terminal with the magnitude of the voltage VU at the U-terminal, and outputs a compared result, i.e., (VU - VG). In the condition of VG ≤ VU, the U-phase lower-arm negative voltage detection circuit 1001b outputs a positive voltage with respect to the G-terminal, and in the condition of VG > VU, it outputs a negative voltage with respect to the G-terminal. The U-phase lower-arm negative voltage detection circuit 1001b can be realized, for example, by a subtracter using an operational amplifier. Also, the U-phase lower-arm voltage amplification circuit 1002b amplifies a negative voltage portion of an output of the U-phase lower-arm negative voltage detection circuit 1001b to the threshold voltage of the U-phase lower arm MOSFET. The U-phase lower-arm voltage amplification circuit 1002b can be realized, for example, by a half-wave rectification circuit and an amplification circuit using an operational amplifier.

With the construction described above, it is possible to perform the MOS rectification by detecting the rectification timing from the U-terminal voltage VU and turning on/off the U-phase upper arm MOSFET and the U-phase lower arm MOSFET. As a result, a rectification loss can be reduced in comparison with that resulting in the case of using the diode rectification.

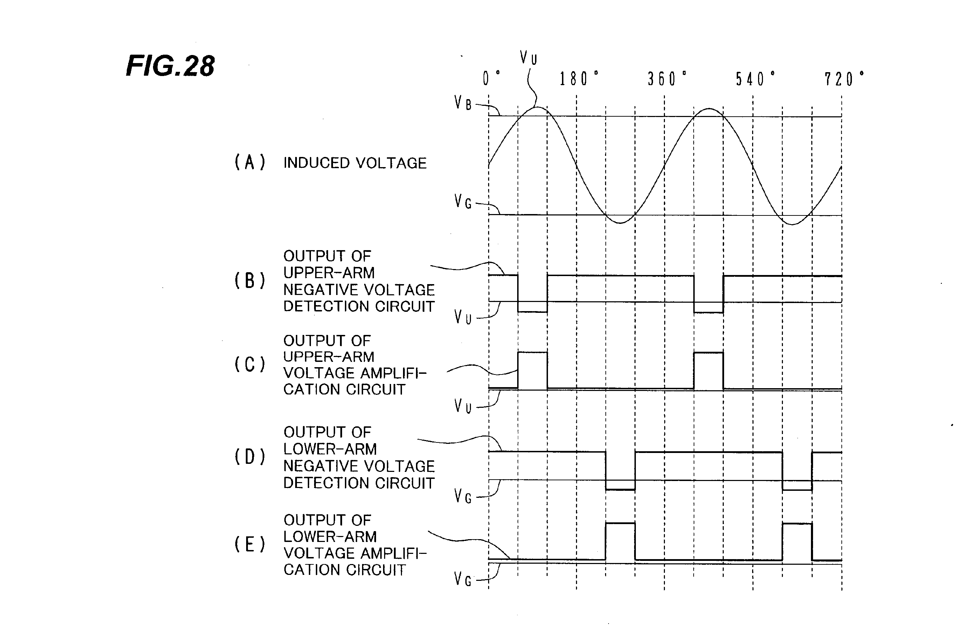

The operation of the rectification detecting/driving circuit 31 used in the motor control device of this embodiment will be described below with reference to Fig. 28.

Fig. 28 is a waveform chart of the rectification detecting/driving circuit used in the motor control device according to another embodiment of the present invention.

In Fig. 28, VB indicates the B-terminal voltage, VU indicates the U-terminal voltage, and VG indicates the G-terminal voltage. (A) in Fig. 28 represents the induced voltages, (B) represents the output of the upper-arm negative voltage detection circuit 1001a, and (C) represents the output of the upper-arm voltage amplification circuit 1002a. (D) in Fig. 28 represents the output of the lower-arm negative voltage detection circuit 1001b, and (E) represents the output of the lower-arm voltage amplification circuit 1002b.

As shown in Fig. 28(B), the upper-arm negative voltage detection circuit 1001a outputs a voltage value of (VB - VU) with respect to the VU as a reference. In the condition of VU ≤ VB, the circuit 1001a outputs a positive voltage with respect to the VU as a reference, and in the condition of VU > VB, it outputs a negative voltage with respect to the VU as a reference. Also, as shown in Fig. 28(C), the upper-arm voltage amplification circuit 1002a amplifies a negative voltage portion level of the output of the upper-arm negative voltage detection circuit 1001a after half-wave rectification.

As shown in Fig. 28(D), the lower-arm negative voltage detection circuit 1001b outputs a voltage value of (VU - VG) with respect to the VG as a reference. In the condition of VG ≤ VU, the circuit 1001b outputs a positive voltage with respect to the VG as a reference, and in the condition of VG > VU, it outputs a negative voltage with respect to the VG as a reference. Also, as shown in Fig. 28(E), the lower-arm voltage amplification circuit 1002b amplifies a negative voltage portion level of the output of the lower-arm negative voltage detection circuit 1001b after half-wave rectification.

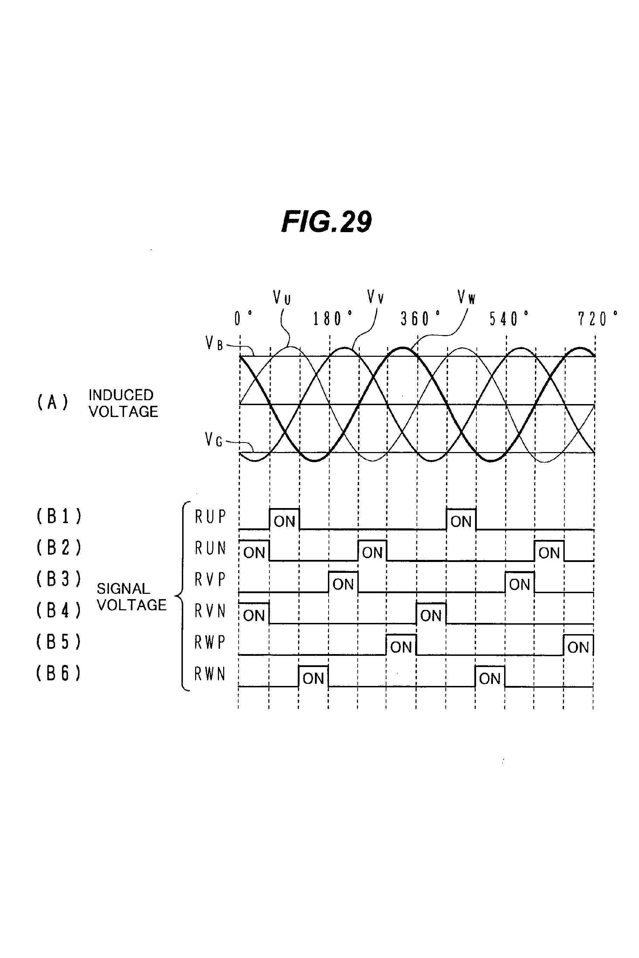

With reference to Fig. 29, a description will be made of MOSFET gate drive signals of the U, V and W phases in the synchronous rectification control executed by the motor control device of this embodiment.

Fig. 29 is a waveform chart of MOSFET gate drive signals of the U, V and W phases in the synchronous rectification control executed by the motor control device according to another embodiment of the present invention.

A voltage pulse RUP shown at (B1) in Fig. 29 serves as a drive signal for the U-phase upper arm MOSFET, and a voltage pulse RUN shown at (B2) in Fig. 29 serves as a drive signal for the U-phase lower arm MOSFET. In response to each of those voltage pulses, the corresponding MOSFET is turned on when the voltage pulse has a high level, and is turned off when the voltage pulse has a low level. Also, the voltage pulse RUN takes a low level when the voltage pulse RUP takes a high level, and conversely the voltage pulse RUN takes a high level when the voltage pulse RUP takes a low level. In addition, to prevent the upper arm MOSFET and the lower arm MOSFET from turning on at the same time, those voltage pulses are set to have a period (i.e., a dead time) during which both the voltage pulses are turned off at the same time.

When the U-terminal voltage VU exceeds above the B-terminal voltage VB, the RUP turns to a high level, and when the U-terminal voltage VU exceeds below the B-terminal voltage VB, the RUP turns to a low level. When the U-terminal voltage VU exceeds below the G-terminal voltage VG, the RUN turns to a high level, and when the U-terminal voltage VU exceeds above the G-terminal voltage VG, the RUN turns to a low level. The other voltage pulses of the V and W phases behave in a similar way. Incidentally, a voltage pulse RVP shown at (B3) in Fig. 29 serves as a drive signal for the V-phase upper arm MOSFET, and a voltage pulse RVN shown at (B4) serves as a drive signal for the V-phase lower arm MOSFET. A voltage pulse RWP shown at (B5) in Fig. 29 serves as a drive signal for the W-phase upper arm MOSFET, and a voltage pulse RWN shown at (B6) serves as a drive signal for the W-phase lower arm MOSFET.

With the construction described above, it is possible to perform the MOS rectification by detecting the rectification timing from each of the terminal voltages VU, VV and VW, and turning on/off the upper arm MOSFET and the lower arm MOSFET for the respective phases. As a result, a rectification loss can be reduced in comparison with that resulting in the case of using the diode rectification.

The preferred embodiments of the present invention have been described above, but the present invention is not limited to the embodiments described above. It is obvious to those skilled in the art that the present invention can be modified in various forms without departing the scope of the invention defined in the attached claims.

The advantages of the present invention are summarized below. Since the rectangular-wave driving control is performed in the power running mode, the utilization factor of voltage can be increased.

Since the synchronous rectification control is performed in the electricity generation mode, the efficiency of electricity generation can be increased.

In any of the power running mode and the electricity generation mode, noises caused with the switching operation can be eliminated.

The power running control can be performed without using a microcomputer, and the efficiency of rectification can be increased.

## Claims

1. A motor control device (3) comprising rectifying devices and switching devices for three phases, which are connected between a DC power source (5) and armature coils (16) of an AC motor (9) operatively coupled to an internal combustion engine (1),

   said motor control device (3) having the inverter function of converting a DC power from said DC power source (5) into an AC power and supplying the AC power to said armature coils (16), and the converter function of converting an AC power generated by said AC motor (9) into a DC power and supplying the DC power to said DC power source (5),

   wherein rectangular-wave driving control of applying rectangular-wave voltages to said armature coils (16) of said AC motor (9) is performed when said AC motor (9) is operated for power running, and synchronous rectification control for making synchronous rectification of the AC power generated by said AC motor (9) is performed when said AC motor (9) is operated for electricity generation.

2. A motor control device according to Claim 1, wherein when the rectangular-wave voltages are applied to said armature coils (16) in the rectangular-wave driving control, currents flowing through said switching devices are held below maximum allowable current values of said switching devices.

3. A motor control device according to Claim 2, wherein pulse widths of the rectangular-wave voltages applied to said armature coils (16) are set such that the currents flowing through said switching devices are held below the maximum allowable current values of said switching devices.

4. A motor control device according to Claim 2, wherein resistance values of said armature coils (16) are set such that the currents flowing through said switching devices are held below the maximum allowable current values of said switching devices.

5. A motor control device according to any of Claims 1 to 4, wherein, in the rectangular-wave driving control, pulse widths of the rectangular-wave voltages applied to said armature coils (16) are set such that each pulse width is equal to a half cycle (180°) of an electrical angle of said AC motor (9) at maximum and gradually decreases as a rotation speed of said AC motor (9) lowers.

6. A motor control device according to any of Claims 1 to 5, wherein, in the rectangular-wave driving control, pulse widths of the rectangular-wave voltages applied to said armature coils (16) are set such that each pulse width is equal to a half cycle (180°) of an electrical angle of said AC motor (9) at maximum and gradually decreases as a voltage of said AC motor (9) lowers.

7. A motor control device according to Claim 6, wherein, in the rectangular-wave driving control, the pulse widths of the rectangular-wave voltages applied to said armature coils (16) are set such that, when a voltage of said DC power source (5) is relatively high, currents flowing through said switching devices are held below the maximum allowable current values of said switching devices.

8. A motor control device according to any of Claims 1 to 7, wherein, in the rectangular-wave driving control, pulse widths of the rectangular-wave voltages applied to said armature coils (16) are set such that each pulse width is equal to a half cycle (180°) of an electrical angle of said AC motor (9) at maximum and gradually decreases as temperatures of said armature coils (16) or temperatures of said switching devices rise.

9. A motor control device according to Claim 8, wherein, in the rectangular-wave driving control, the pulse widths of the rectangular-wave voltages applied to said armature coils (16) are set such that, when temperatures of said armature coils (16) or temperatures of said switching devices are relatively high, currents flowing through said switching devices are held below the allowable temperatures of said armature coils (16) or said switching devices.

10. A motor control device according to at least one of Claims 1 to 9, wherein the power running under the rectangular-wave driving control is performed when the rotation speed of said AC motor (9) is lower than a predetermined speed, and the electricity generation under the synchronous rectification control is performed when the rotation speed of said AC motor (9) is higher than the predetermined speed.

11. A motor control device according to at least one of Claims 1 to 10, wherein the power running under the rectangular-wave driving control is performed when a predetermined time has not yet lapsed from start of operation of said internal combustion engine (1), and electricity generation under the synchronous rectification control is performed when the predetermined time has lapsed from start of operation of said internal combustion engine (1).

12. A motor control device (3) for performing power running control and electricity generation control on an AC motor (9) connected to an internal combustion engine (1), said motor control device (3) comprising:

a power module (10) including rectifying devices and switching devices, and having the inverter function of converting a direct current into an alternating current and the converter function of converting an alternating current into a direct current;
a power-running/electricity-generation changing-over unit (19) for changing over the power running control and the electricity generation control to be performed on said AC motor (9); and
a power running control unit (20D) for performing the power running control on said AC motor (9) when the power running control is selected by said power-running/electricity-generation changing-over unit (19),
said power running control unit (20D) comprising:

a magnetic pole position detecting unit (21) for detecting a magnetic pole position or an electrical angle of said AC motor (9);
a speed computing unit (22) for computing a rotation speed $\omega$ of said AC motor (9) ;
an interlinkage magnetic-flux amount computing unit (23) for computing an amount of magnetic flux $\Phi$ interlinking with armature coils (16) of a stator of said AC motor (9);
a voltage vector phase computing unit (24) for computing a phase $\theta v$ of a voltage vector V applied to the armature coil (16) of the stator of said AC motor (9); and
a pulse generating unit (25) for generating a switching signal applied to the switching device of said power module (10),
thereby performing rectangular-wave driving control on said AC motor (9) in a power running mode.

13. A motor control device (3) for performing power running control and electricity generation control on an AC motor (9) connected to an internal combustion engine (1), said motor control device (3) comprising:

a power module (10) including rectifying devices and switching devices, and having the inverter function of converting a direct current into an alternating current and the converter function of converting an alternating current into a direct current;
a power-running/electricity-generation changing-over unit (19) for changing over the power running control and the electricity generation control to be performed on said AC motor (9); and

an electricity generation control unit (20G) for performing the electricity generation control on said AC motor (9) when the electricity generation control is selected by said power-running/electricity-generation changing-over unit (19),

said electricity generation control unit (20G) comprising:

a magnetic pole position detecting unit (21) for detecting a magnetic pole position or an electrical angle of said AC motor (9);

a speed computing unit (22) for computing a rotation speed ω of said AC motor (9);

an interlinkage magnetic-flux amount computing unit (23) for computing an amount of magnetic flux Φ interlinking with armature coils (16) of a stator of said AC motor (9);

an induced voltage computing unit (26) for computing induced voltages Vue, Vve and Vwe of respective phases in the armature coils (16) of said rotor of said AC motor (9);

a DC voltage detecting unit (27) for detecting a voltage VB of a DC power source (5) connected to said power

a voltage comparing unit (28) for comparing inter-line values of the induced voltages Vue, Vve and Vwe with the voltage VB of said DC power source (5);

a pulse cycle computing unit (29) for computing a pulse cycle of a switching signal applied to the switching device of said power module (10) based on a result of the comparison made by said voltage comparing unit (28); and

a pulse generating unit (25) for generating the switching signal applied to the switching device of said power module (10) based on the pulse cycle computed by said pulse cycle computing unit (29), thereby performing synchronous rectification control on said AC motor (9) in an electricity generation mode.

14. A motor control device according to Claim 13, wherein the induced voltages generated in said AC motor (9) when said internal combustion engine (1) is running at idle is higher than the voltage of said DC power source (5).

15. A motor control device (3) comprising:

upper arm driving means (30a, 40a, 50a) for receiving a power-running or rectification mode command, selecting an upper-arm power running drive signal or an upper-arm rectification drive signal in response to the power-running or rectification mode command, and outputting the upper-arm power running drive signal or the upper-arm rectification drive signal to a control terminal of an upper-arm switching device;

lower arm driving means (30b, 40b, 50b) for receiving a power-running or rectification mode command, selecting a lower-arm power running drive signal or a lower-arm rectification drive signal in response to the power-running or rectification mode command, and outputting the lower-arm power running drive signal or the lower-arm rectification drive signal to a control terminal of a lower-arm switching device;

phase-correction drive signal distributing means (32, 42, 52)for receiving a magnetic pole position detected signal from an AC motor (9), advancing a phase of the magnetic pole position detected signal depending on a rotation speed of said AC motor, and distributing the magnetic pole position detected signal having the advanced phase as the upper-arm power running drive signal and the lower-arm power running drive signal, the upper-arm power running drive signal being outputted to said upper-arm driving means and the lower-arm power running drive signal being outputted to said lower-arm driving means;

upper-arm rectification detecting means (31a, 41a, 51a) for comparing the magnitude of a potential at a higher potential terminal for a main power source with the magnitude of a potential at an output terminal, and outputting the upper-arm rectification drive signal to said upper-arm driving means when the magnitude of the potential at the output terminal is larger; and

lower-arm rectification detecting means (31b, 41b, 51b) for comparing the magnitude of the potential at the output terminal with the magnitude of a potential at a lower potential terminal for said main power source, and outputting the lower-arm rectification drive signal to said lower-arm driving means when the magnitude of the potential at the output terminal is smaller.

16. A motor control device according to Claim 15, wherein said phase-correction drive signal distributing means (32, 42, 52) comprises:

a frequency-voltage conversion circuit (209) for receiving the magnetic pole position detected signal from said AC motor (9) and converting rotation frequency of said AC motor (9) into a DC voltage;

a constant current source having a current value changed depending on an output voltage of said frequency-voltage conversion circuit (209);

triangular wave generating means for generating a triangular wave with a constant current supplied from said constant current source;

a capacity charging switch (204a) for delivering the current from said constant current source to said triangular wave generating means;

a capacity discharging switch (204b) for drawing the current from said triangular wave generating means into said constant current source;

a voltage comparator (206) for comparing the triangular wave outputted from said triangular wave generating means with a reference voltage, and generating a voltage pulse;

a drive signal distribution circuit (207) for distributing the voltage pulse outputted from said voltage comparator (206) as the upper-arm power running drive signal with the potential at the lower potential terminal for said main power source being a reference, and as lower-arm power running drive signal with the potential at the lower potential terminal for said main power source being a reference, the lower-arm power running drive signal being outputted to said lower-arm driving means; and

a level shift-up circuit (208) for converting the reference potential of the upper-arm power running drive signal from the potential at the lower potential terminal for said main power source into a potential at an output terminal, and outputting the converted potential to said upper-arm driving means.

**17.** A motor control device according to Claim 15 or 16, wherein said upper-arm rectification detecting means (31a, 41a, 51a) comprises:

negative voltage detecting means (1001a) for receiving the potential at the higher potential terminal for said main power source (5) and the potential at the output terminal, outputting a negative voltage to the output terminal when the magnitude of the potential at the output terminal is larger, and outputting a positive voltage to the output terminal when the magnitude of the potential at the output terminal is smaller; and

amplifying means (1002a) for amplifying a voltage level when said negative voltage detecting means outputs a negative voltage, and

wherein said lower-arm rectification detecting means (31b, 41b, 51b) comprises:

negative voltage detecting means (1001b) for receiving the potential at the output terminal and the potential at the lower potential terminal for said main power source (5), outputting a negative voltage to the lower potential terminal for said main power source (5) when the magnitude of the potential at the output terminal is smaller, and outputting a positive voltage to the output terminal when the magnitude of the potential at the output terminal is smaller; and

amplifying means (1002b) for amplifying a voltage level when said negative voltage detecting means outputs a negative voltage.

**18.** A motor control device according to Claim 15, further comprising:

an upper-arm switching device having a drain connected to the higher potential terminal for said main power source (5) and having a source connected to the output terminal; and

a lower-arm switching device having a drain connected to the output terminal and having a source connected to the lower potential terminal for said main power source (5).

# FIG.1

# FIG.2

# FIG.3

# FIG.4

U PHASE   V PHASE   W PHASE

INDUCED VOLTAGE

(A)

APPLIED VOLTAGE
COMMAND

Vu     ON    ON    ON

(B)    Vv    ON    ON

MAGNETIC POLE    Vw    ON    ON
POSITION         θ
(ELECTRICAL ANGLE)  360°

(C)    θv

0°

SWITCHING SIGNAL
PER PHASE

UP    ON    ON    ON

UN    ON    ON

(D)    VP    ON    ON

VN    ON    ON

WP    ON    ON

WN    ON    ON    ON

EP 1 466 779 A2

# FIG.5

```
┌─────────────────────────────┐
│ POWER-RUNNING               │
│ /ELECTRICITY-GENERATION     │──19
│ CHANGING-OVER SECTION       │
└─────────────────────────────┘
                │
                ▼
┌──────────────────────────────────────────────┐
│  POWER RUNNING CONTROL SECTION          ──20D │
│                                               │
│   ┌─────────────────────────────┐             │
│   │ MAGNETIC POLE POSITION      │──21         │
│   │ DETECTING UNIT              │             │
│   └─────────────────────────────┘             │
│                                               │
│   ┌─────────────────────────────┐             │
│   │ SPEED COMPUTING UNIT        │──22         │
│   └─────────────────────────────┘             │
│                                               │
│   ┌─────────────────────────────┐             │
│   │ INTERLINKAGE MAGNETIC-FLUX  │──23         │
│   │ AMOUNT COMPUTING UNIT       │             │
│   └─────────────────────────────┘             │
│                                               │
│   ┌─────────────────────────────┐             │
│   │ VOLTAGE VECTOR PHASE        │──24         │
│   │ COMPUTING UNIT              │             │
│   └─────────────────────────────┘             │
│                │                              │
│                ▼                              │
│   ┌─────────────────────────────┐             │
│   │ PULSE GENERATING UNIT       │──25         │
│   └─────────────────────────────┘             │
│      │   │   │   │   │   │                    │
└──────┼───┼───┼───┼───┼───┼────────────────────┘
       ▼   ▼   ▼   ▼   ▼   ▼
       Up  Un  Up  Un  Wp  Wn
```

EP 1 466 779 A2

# *FIG.6*

START

S1 — POWER RUNNING ?

No: ELECTRICITY GENERATION

Yes

$\theta$ →  DETECT MAGNETIC POLE POSITION — S2

SYNCHRONOUS RECTIFICATION CONTROL

S10∼S16,S6

SPEED $\omega$  ← COMPUTE SPEED — S3

$\theta$

EXCITATION CURRENT If →  DETECT AMOUNT OF INTERLINKAGE MAGNETIC FLUX — S4

SPEED $\omega$

$\phi$

COMPUTE PHASE OF VOLTAGE VECTOR — S5

$\theta v$ — S6

PULSE OUTPUT PROCESSING

→ UP
→ UN
→ VP
→ VN
→ WP
→ WN

END

28

# FIG.7

EP 1 466 779 A2

U PHASE   V PHASE   W PHASE

INDUCED VOLTAGE

(A)

APPLIED VOLTAGE
COMMAND

Vu

(B)   Vv

MAGNETIC POLE   Vw
POSITION   θ
(ELECTRICAL ANGLE) 360°

(C)

0°

SWITCHING SIGNAL
PER PHASE

UP

UN

(D)   VP

VN

WP

WN

θv

ON

## FIG.8

## FIG.9

# FIG.10

PULSE
WIDTH

180°

x°

0

TI1

SWITCHING DEVICE
TEMPERATURE

# FIG.11

PULSE
WIDTH

180°

y°

TM1

ARMATURE COIL
TEMPERATURE

# FIG.12

POWER-RUNNING /ELECTRICITY -GENERATION CHANGING-OVER SECTION — 19

ELECTRICITY GENERATION CONTROL SECTION — 20G

MAGNETIC POLE POSITION DETECTING UNIT — 21

SPEED COMPUTING UNIT — 22

INTERLINKAGE MAGNETIC-FLUX AMOUNT COMPUTING UNIT — 23

INDUCED VOLTAGE COMPUTING UNIT — 26

DC VOLTAGE DETECTING UNIT — 27

Vue  Vve  Vwe        VB

VOLTAGE COMPARING UNIT — 28

PULSE CYCLE COMPUTING UNIT — 29

PULSE GENERATING UNIT — 25

Up  Un  Up  Un  Wp  Wn

# FIG.13

(A) INDUCED VOLTAGE — Vue, Vve, Vwe; em, em/2, −em/2, −em

(B) INDUCED VOLTAGE (INTER-LINE) — Vuv, Vuw, Vvw; Ve, VB

(C) MAGNETIC POLE POSITION (ELECTRICAL ANGLE) 360°, 0°

(D) SWITCHING SIGNAL PER PHASE — UP, UN, VP, VN, WP, WN

EP 1 466 779 A2

# FIG.14

(A) INDUCED VOLTAGE

Vue  Vve  Vwe

em
em/2
−em/2
−em

(B) INDUCED VOLTAGE (INTER-LINE)

Vuv Vuw Vvw

VB
Ve

(C) MAGNETIC POLE POSITION (ELECTRICAL ANGLE)

360°
0°

(D) SWITCHING SIGNAL PER PHASE

UP
UN
VP
VN
WP
WN

EP 1 466 779 A2

## FIG.15

START

S1
POWER RUNNING ?

No: ELECTRICITY GENERATION

Yes

S1~S6
RECTANGULAR-WAVE DRIVING CONTROL

S10
DETECT MAGNETIC POLE POSITION ← $\theta$

S11
COMPUTE SPEED

$\theta$

$\omega$

EXCITATION CURRENT If

S12
DETECT AMOUNT OF INTERLINKAGE MAGNETIC FLUX

$\omega$

$\phi$

S13
COMPUTE INDUCED VOLTAGE

VB

S14
DETECT DC VOLTAGE

VB

Vuv,Vvw,Vwu

S15
COMPARE VOLTAGES

S16
COMPUTE PULSE CYCLE

S6
PULSE OUTPUT PROCESSING → UP → UN → VP → VN → WP → WN

END

EP 1 466 779 A2

# FIG.16

ENGINE
REVOLUTION
SPEED

IDLE SPEED

ELECTRICITY
GENERATION
CONTROL

0

ω0

MOTOR ROTATION
SPEED ω

POWER OUTPUTTING
CONTROL

# FIG.17

ENGINE
REVOLUTION
SPEED

IDLE SPEED

ELECTRICITY
GENERATION
CONTROL

0

T0

TIME t FROM
INPUTTING OF START
COMMAND SIGNAL

POWER OUTPUTTING
CONTROL

36

# FIG.18

FIG.19

# FIG.20

LEAD ANGLE
$-\theta_V(°)$

$-\theta_{c1}$

$-\theta_{c2}$

$\theta_C = -Kf$

$0 \quad f_1 \quad f_2$ FREQUENCY f (Hz)

# FIG.21

CURRENT VALUE
$I_{DC}$ OF CONSTANT
CURRENT SOURCE

$I_{DC2}$

$I_{DC1}$

$f_1 \quad f_2$ FREQUENCY f (Hz)

$120/K$

## FIG.22

## FIG.23

# FIG.24

CASE OF
LOW f (f = f₁)

(A) U-PHASE MAGNETIC
POLE POSITION
DETECTED VOLTAGE (hu)

(B) W-PHASE MAGNETIC
POLE POSITION
DETECTED VOLTAGE (hw)

TRIANGULAR
WAVE

$V_{cc}/2$

(C) OUTPUT VOLTAGE
PULSE OF
COMPARATOR 206 (hu')

$\theta_{d1}$

$\theta_{c1}$

0° 180° 360° 540°

EP 1 466 779 A2

# FIG.25

CASE OF
HIGH f (f = $f_2$)

(A) U-PHASE MAGNETIC POLE POSITION DETECTED VOLTAGE (hu)

(B) W-PHASE MAGNETIC POLE POSITION DETECTED VOLTAGE (hw)

(C) OUTPUT VOLTAGE PULSE OF COMPARATOR 206 (hu')

0°   360°   720°

TRIANGULAR WAVE

$V_{cc}/2$

$\theta_{d2}$

$\theta_{c2}$

EP 1 466 779 A2

# FIG.26

(A) INDUCED VOLTAGE

(B) MAGNETIC POLE POSITION DETECTED VOLTAGE

hu

hv

hw

(C) SWITCHING SIGNAL VOLTAGE PER PHASE

hup

hun

hvp

hvn

hwp

hwn

U PHASE  V PHASE  W PHASE

0°  180°  360°  540°  720°

$\theta c$

ON ON ON

ON ON

$\theta c$

ON ON

ON ON

$\theta c$

ON ON

ON ON

EP 1 466 779 A2

# FIG.27

# FIG.28

(A) INDUCED VOLTAGE

(B) OUTPUT OF UPPER-ARM NEGATIVE VOLTAGE DETECTION CIRCUIT

(C) OUTPUT OF UPPER-ARM VOLTAGE AMPLIFI-CATION CIRCUIT

(D) OUTPUT OF LOWER-ARM NEGATIVE VOLTAGE DETECTION CIRCUIT

(E) OUTPUT OF LOWER-ARM VOLTAGE AMPLIFI-CATION CIRCUIT

# FIG.29